# EUROPEAN PATENT APPLICATION

(11) **EP 1 632 283 A1**
(43) Date of publication of application: **08.03.2006**
(21) Application number: 05255344.3
(22) Date of filing: 01.09.2005
(51) Int. Cl.: B01J 19/00, G01N 35/00

(54) **Methods and devices for processing chemical arrays**

(30) Priority: 02.09.2004 US 934616
(71) Applicant: Agilent Technologies, Inc., Palo Alto, CA 94306 (US)
(72) Inventor: Thompson, Allen C., Sunnyvale, California 94087-2257 (US); Schleifer, Arthur, Portola Valley, California 94028 (US)
(74) Representative: Tollett, Ian

(57) **Abstract**

The subject invention provides methods and devices for processing at least one chemical array (112) on a flexible substrate (110). Also provided are methods of using chemical arrays (112) produced according to the subject invention, and arrays (112) processed according to the subject methods, as well as systems and kits for practicing the subject methods.

## Description

The present invention relates to a method of processing at least one chemical array and to a rigid carrier and a structure for use in an array manufacturing method.

Chemical arrays such as biopolymer arrays (for example polynucleotide array such as DNA or RNA arrays), are known and are used, for example, as diagnostic or screening tools. Such arrays include regions of usually different sequence polynucleotides arranged in a predetermined configuration on a substrate. These regions (sometimes referenced as "features") are positioned at respective locations ("addresses") on the substrate. The arrays, when exposed to a sample, will exhibit an observed binding pattern. This binding pattern can be detected upon interrogating the array. For example all polynucleotide targets (for example, DNA) in the sample can be labeled with a suitable label (such as a fluorescent compound), and the fluorescence pattern on the array accurately observed following exposure to the sample. Assuming that the different sequence polynucleotides were correctly deposited in accordance with the predetermined configuration, then the observed binding pattern will be indicative of the presence and/or concentration of one or more polynucleotide components of the sample.

Arrays can be fabricated by depositing previously obtained biopolymers onto a substrate, or by in situ synthesis methods. The in situ fabrication methods include those described in US 5,449,754 for synthesizing peptide arrays, and in US 6,180,351 and WO 98/41531 and the references cited therein for synthesizing polynucleotide arrays. Further details of fabricating biopolymer arrays are described in US 6,242,266; US 6,232,072 and US 6,171,797. Other techniques for fabricating biopolymer arrays include known light directed synthesis techniques. Methods for sample preparation, labeling, and hybridizing are disclosed for example in US 6,201,112; US 6,132,997; US 6,235,483 and US patent publication 20020192650.

After an array has been exposed to a sample, the array is read with a reading apparatus (such as an array "scanner") which detects the signals (such as a fluorescence pattern) from the array features. The signal image resulting from reading the array may then be digitally processed to evaluate which regions (pixels) of read data belong to a given feature as well as the total signal strength from each of the features. The foregoing steps, separately or collectively, are referred to as "feature extraction".

As chemical arrays are used more and continue to play important roles in a variety of applications, there continues to be an interest in the development of methods and devices for the fabrication of chemical arrays.

The subject invention provides methods and devices for processing (e.g., fabricating, hybridizing, etc.) at least one chemical array on a flexible substrate. Embodiments of the subject invention include rigid carriers for supporting a flexible array substrate during array fabrication processes. The rigid carriers include a first surface for receiving a flexible substrate and a second surface having a chuck-coupling region for coupling the rigid carrier to a chuck. Embodiments also include methods of processing a chemical array and include stably associating a flexible array substrate to a rigid carrier and processing a chemical array on the stably associated flexible array substrate. Also provided are methods of using chemical arrays produced according to the subject invention and arrays processed according to the subject methods, as well as systems and kits for practicing the subject methods.

A number of preferred embodiments of the invention will now be described with reference to the drawings, in which:

Figs. 1A and 1B show exemplary embodiments of rigid carriers having a flexible array substrate positioned thereon and coupled to a chuck according to the subject invention, wherein Fig. 1A shows an exemplary rigid carrier configured to couple to a chuck that is connectable to a vacuum source and to hold a flexible array using vacuum forces and Fig. 1B shows an exemplary rigid carrier configured to couple to a chuck connectable to a voltage source and to hold a flexible array using electrostatic forces.

Fig. 2 shows another exemplary embodiment of the subject invention that includes a foundation structure in the form of a pedestal supporting a plurality of prongs held by a rigid carrier, wherein a flexible array substrate is positioned on the prongs.

Fig. 3 shows an exemplary embodiment of a plate having a support and a plurality of holes through the support which may be used with the pedestal/prong device of Fig. 2.

Figs 4A and 4B, show exemplary embodiments of a flexible array substrate wherein Fig. 4A shows the flexible substrate without chemical arrays disposed thereon and Fig. 4B shows the flexible array substrate of Fig. 4A having chemical arrays disposed thereon.

Fig. 5 shows an exemplary embodiment of a cross section of a flexible array substrate.

Fig. 6 shows another exemplary embodiment of a cross section of a flexible array substrate.

Fig. 7 illustrates an exemplary embodiment of a method according to the subject invention.

Fig. 8 shows an exemplary embodiment of a carrier of the subject invention gripped by end effectors of a robotic arm.

Fig. 9 shows an exemplary embodiment of a flexible array substrate stably associated with a surface of a rigid carrier with forces.

Figs. 10A and 10B show exemplary embodiments employing a sealing member in the form of a mechanical clamp positioned to seal the perimeter of a flexible array substrate to a surface of a carrier.

Figs. 11A and 11B show exemplary embodiments employing a sealing member in the form of adhesive tape positioned to seal the perimeter of a flexible array substrate to a surface of a carrier.

Fig. 12 shows an exemplary embodiment of a sealing member in the form of adhesive positioned to seal the perimeter of a flexible array substrate to a surface of a carrier wherein a portion of the flexible substrate is separated from the adhesively-sealed perimeter portion.

Fig. 13 shows a portion of an exemplary embodiment of multi-array device in the form of a pedestal supporting a plurality of prongs, and at least one prong having affixed thereto a flexible array substrate having at least one chemical array disposed thereon.

Fig. 14 shows an enlarged view of a portion of Fig. 4B showing spots or features.

Fig. 15 is an enlarged view of a portion of the substrate of Fig. 14.

To facilitate understanding, identical reference numerals have been used, where practical, to designate the same elements which are common to different figures. Drawings are not necessarily to scale. Throughout this application any different members of a generic class may have the same reference number followed by different letters (for example, arrays 12a, 12b, 12c, and 12d may generically be referenced as "arrays 12")

### DEFINITIONS

Throughout the present application, unless a contrary intention appears, the following terms refer to the indicated characteristics.

By "chuck" is meant broadly to refer to any suitable holding structure for holding a work piece, i.e., a device that is adapted to hold a work piece, e.g., during one or more process steps.

A "biopolymer" is a polymer of one or more types of repeating units. Biopolymers are typically found in biological systems and particularly include polysaccharides (such as carbohydrates), and peptides (which term is used to include polypeptides, and proteins whether or not attached to a polysaccharide) and polynucleotides as well as their analogs such as those compounds composed of or containing amino acid analogs or non-amino acid groups, or nucleotide analogs or non-nucleotide groups. This includes polynucleotides in which the conventional backbone has been replaced with a non-naturally occurring or synthetic backbone, and nucleic acids (or synthetic or naturally occurring analogs) in which one or more of the conventional bases has been replaced with a group (natural or synthetic) capable of participating in Watson-Crick type hydrogen bonding interactions. Polynucleotides include single or multiple stranded configurations, where one or more of the strands may or may not be completely aligned with another. Specifically, a "biopolymer" includes DNA (including cDNA), RNA and oligonucleotides, regardless of the source.

A "biomonomer" references a single unit, which can be linked with the same or other biomonomers to form a biopolymer (for example, a single amino acid or nucleotide with two linking groups one or both of which may have removable protecting groups). A biomonomer fluid or biopolymer fluid reference a liquid containing either a biomonomer or biopolymer, respectively (typically in solution).

A "nucleotide" refers to a sub-unit of a nucleic acid and has a phosphate group, a 5 carbon sugar and a nitrogen containing base, as well as functional analogs (whether synthetic or naturally occurring) of such sub-units which in the polymer form (as a polynucleotide) can hybridize with naturally occurring polynucleotides in a sequence specific manner analogous to that of two naturally occurring polynucleotides.

An "oligonucleotide" generally refers to a nucleotide multimer of about 10 to 100 nucleotides in length, while a "polynucleotide" includes a nucleotide multimer having any number of nucleotides.

A chemical "array", unless a contrary intention appears, includes any one, two or three-dimensional arrangement of addressable regions bearing a particular chemical moiety or moieties (for example, biopolymers such as polynucleotide sequences) associated with that region. For example, each region may extend into a third dimension in the case where the substrate is porous while not having any substantial third dimension measurement (thickness) in the case where the substrate is non-porous. An array is "addressable" in that it has multiple regions (sometimes referenced as "features" or "spots" of the array) of different moieties (for example, different polynucleotide sequences) such that a region at a particular predetermined location (an "address") on the array will detect a particular target or class of targets (although a feature may incidentally detect non-targets of that feature). An array feature is generally homogenous in composition and concentration and the features may be separated by intervening spaces (although arrays without such separation can be fabricated). In the case of an array, the "target" will be referenced as a moiety in a mobile phase (typically fluid), to be detected by probes ("target probes") which are bound to the substrate at the various regions. However, either of the "target" or "target probes" may be the one which is to be detected by the other (thus, either one could be an unknown mixture of polynucleotides to be detected by binding with the other).

An "array layout" or "array characteristics", refers to one or more physical, chemical or biological characteristics of the array, such as positioning of some or all the features within the array and on a substrate, one or more feature dimensions, or some indication of an identity or function (for example, chemical or biological) of a moiety at a given location, or how the array should be handled (for example, conditions under which the array is exposed to a sample, or array reading specifications or controls following sample exposure).

"Hybridizing" and "binding", with respect to polynucleotides, are used interchangeably.

A "plastic" is any synthetic organic polymer of high molecular weight (for example at least 1,000 grams/mole, or even at least 10,000 or 100,000 grams/mole.

"Flexible" with reference to a substrate or substrate web, references that the substrate can be bent 180 degrees around a roller of less than 1.25 cm in radius. The substrate can be so bent and straightened repeatedly in either direction at least 100 times without failure (for example, cracking) or plastic deformation. This bending must be within the elastic limits of the material. The foregoing test for flexibility is performed at a temperature of 20 °C.

"Rigid" refers to a material or structure which is relatively not flexible, and is constructed such that a segment about 2.5 by 7.5 cm retains its shape and cannot be bent along any direction more than 60 degrees (and often not more than 40, 20, 10, or 5 degrees) without breaking.

When one item is indicated as being "remote" from another, this is referenced that the two items are at least in different buildings, and may be at least one mile, ten miles, or at least one hundred miles apart. When different items are indicated as being "local" to each other they are not remote from one another (for example, they can be in the same building or the same room of a building). "Communicating", "transmitting" and the like, of information reference conveying data representing information as signals (e.g., electrical signals, optical signals, and the like) over a suitable communication channel (for example, a private or public network, wired, optical fiber, wireless radio or satellite, or otherwise). Any communication or transmission can be between devices which are local or remote from one another. "Forwarding" an item refers to any means of getting that item from one location to the next, whether by physically transporting that item or using other known methods (where that is possible) and includes, at least in the case of data, physically transporting a medium carrying the data or communicating the data over a communication channel (including electrical, optical, or wireless). "Receiving" something means it is obtained by any possible means, such as delivery of a physical item (for example, an array or array carrying package). When information is received it may be obtained as data as a result of a transmission (such as by electrical or optical signals over any communication channel of a type mentioned herein), or it may be obtained as electrical or optical signals from reading some other medium (such as a magnetic, optical, or solid state storage device) carrying the information. However, when information is received from a communication it is received as a result of a transmission of that information from elsewhere (local or remote).

When two items are "associated" with one another they are provided in such a way that it is apparent one is related to the other such as where one references the other. For example, an array identifier can be associated with an array by being on the array assembly (such as on the substrate or a housing) that carries the array or on or in a package or kit carrying the array assembly. Items of data are "linked" to one another in a memory when a same data input (for example, filename or directory name or search term) retrieves those items (in a same file or not) or an input of one or more of the linked items retrieves one or more of the others. In particular, when an array layout is "linked" with an identifier for that array, then an input of the identifier into a processor which accesses a memory carrying the linked array layout retrieves the array layout for that array.

A "computer", "processor" or "processing unit" are used interchangeably and each references any hardware or hardware/software combination which can control components as required to execute recited steps. For example a computer, processor, or processor unit includes a general purpose digital microprocessor suitably programmed to perform all of the steps required of it, or any hardware or hardware/software combination which will perform those or equivalent steps. Programming may be accomplished, for example, from a computer readable medium carrying necessary program code (such as a portable storage medium) or by communication from a remote location (such as through a communication channel).

A "memory" or "memory unit" refers to any device which can store information for retrieval as signals by a processor, and may include magnetic or optical devices (such as a hard disk, floppy disk, CD, or DVD), or solid state memory devices (such as volatile or non-volatile RAM). A memory or memory unit may have more than one physical memory device of the same or different types (for example, a memory may have multiple memory devices such as multiple hard drives or multiple solid state memory devices or some combination of hard drives and solid state memory devices).

An array "assembly" includes a substrate and at least one chemical array on a surface thereof. Array assemblies may include one or more chemical arrays present on a surface of a device that includes a pedestal supporting a plurality of prongs, e.g., one or more chemical arrays present on a surface of one or more prongs of such a device. An assembly may include other features (such as a housing with a chamber from which the substrate sections can be removed). "Array unit" may be used interchangeably with "array assembly".

"Reading" signal data from an array refers to the detection of the signal data (such as by a detector) from the array. This data may be saved in a memory (whether for relatively short or longer terms).

A "package" is one or more items (such as an array assembly optionally with other items) all held together (such as by a common wrapping or protective cover or binding). Normally the common wrapping will also be a protective cover (such as a common wrapping or box) which will provide additional protection to items contained in the package from exposure to the external environment. In the case of just a single array assembly a package may be that array assembly with some protective covering over the array assembly (which protective cover may or may not be an additional part of the array unit itself).

It will also be appreciated that throughout the present application, that words such as "cover", "base" "front", "back", "top", "upper", and "lower" are used in a relative sense only.

"May" refers to optionally.

"Composite" in this context may refer to carriers having a plurality of material layers joined together of like or unlike (different) material. A carrier composite may be a block composite, e.g., an A-B-A block composite, an A-B-C block composite, or the like. A composite may be a heterogeneous combination of materials, i.e., in which the materials are distinct from separate phases, or a homogeneous combination of unlike materials. As used herein, the term "composite" is used to include a "laminate" composite. A "laminate" refers to a composite material formed from several bonded layers of identical or different materials.

When two or more items (for example, elements or processes) are referenced by an alternative "or", this indicates that either could be present separately or any combination of them could be present together except where the presence of one necessarily excludes the other or others.

The term "stringent assay conditions" as used herein refers to conditions that are compatible to produce binding pairs of nucleic acids, e.g., surface bound and solution phase nucleic acids, of sufficient complementarity to provide for the desired level of specificity in the assay while being less compatible to the formation of binding pairs between binding members of insufficient complementarity to provide for the desired specificity. Stringent assay conditions are the summation or combination (totality) of both hybridization and wash conditions.

A "stringent hybridization" and "stringent hybridization wash conditions" in the context of nucleic acid hybridization (e.g., as in array, Southern or Northern hybridizations) are sequence dependent, and are different under different experimental parameters. Stringent hybridization conditions that can be used to identify nucleic acids within the scope of the invention can include, e.g., hybridization in a buffer comprising 50% formamide, 5×SSC, and 1% SDS at 42°C, or hybridization in a buffer comprising 5×SSC and 1% SDS at 65°C, both with a wash of 0.2xSSC and 0.1% SDS at 65°C. Exemplary stringent hybridization conditions can also include a hybridization in a buffer of 40% formamide, 1 M NaCl, and 1% SDS at 37°C, and a wash in 1×SSC at 45°C. Alternatively, hybridization to filter-bound DNA in 0.5 M NaHPO4, 7% sodium dodecyl sulfate (SDS), 1 mM EDTA at 65°C, and washing in 0.1×SSC/0.1% SDS at 68°C can be employed. Yet additional stringent hybridization conditions include hybridization at 60°C or higher and 3 × SSC (450 mM sodium chloride/45 mM sodium citrate) or incubation at 42°C in a solution containing 30% formamide, 1M NaCl, 0.5% sodium sarcosine, 50 mM MES, pH 6.5. Those of ordinary skill will readily recognize that alternative but comparable hybridization and wash conditions can be utilized to provide conditions of similar stringency.

In certain embodiments, the stringency of the wash conditions that set forth the conditions which determine whether a nucleic acid is specifically hybridized to a surface bound nucleic acid. Wash conditions used to identify nucleic acids may include, e.g.: a salt concentration of about 0.02 molar at pH 7 and a temperature of at least about 50°C or about 55°C to about 60°C; or, a salt concentration of about 0.15 M NaCl at 72°C for about 15 minutes; or, a salt concentration of about 0.2×SSC at a temperature of at least about 50°C or about 55°C to about 60°C for about 15 to about 20 minutes; or, the hybridization complex is washed twice with a solution with a salt concentration of about 2×SSC containing 0.1% SDS at room temperature for 15 minutes and then washed twice by 0.1×SSC containing 0.1% SDS at 68°C for 15 minutes; or, equivalent conditions. Stringent conditions for washing can also be, e.g., 0.2×SSC/0.1% SDS at 42°C.

A specific example of stringent assay conditions is rotating hybridization at 65°C in a salt based hybridization buffer with a total monovalent cation concentration of 1.5 M (e.g., as described in U.S. Patent Application No. 09/655,482 filed on September 5, 2000, the disclosure of which is herein incorporated by reference) followed by washes of 0.5X SSC and 0.1X SSC at room temperature.

Stringent assay conditions are hybridization conditions that are at least as stringent as the above representative conditions, where a given set of conditions are considered to be at least as stringent if substantially no additional binding complexes that lack sufficient complementarity to provide for the desired specificity are produced in the given set of conditions as compared to the above specific conditions, where by "substantially no more" is meant less than about 5-fold more, typically less than about 3-fold more. Other stringent hybridization conditions are known in the art and may also be employed, as appropriate.

When two items are "associated" with one another they are provided in such a way that it is apparent one is related to the other, e.g., such as where one references the other. Items that are "stably associated" means the association of the items is substantially resistant to change of position or condition, e.g., the association of the items is substantially firmly established; not easily moved, shaken, or overthrown. For example, items that are stably associated may mean that the items are related in a fixed manner, e.g., with respect to the physical positioning of the items with respect to each other. Relatedness may include, but is not limited to, items that are linked(physically, electrically, chemically, optically, mechanically, etc.), attached (physically, electrically, chemically, optically, mechanically, etc.), connected (physically, electrically, chemically, optically, mechanically, etc.), and the like. Items that are "operatively associated" means that the items are associated in an operative manner or a manner that permits operation or function of the items or items associated therewith.

The subject invention provides methods and devices for fabricating at least one chemical array on a flexible substrate. Embodiments of the subject invention include rigid carriers for supporting a flexible array substrate during array fabrication processes. The rigid carriers include a first surface for receiving a flexible substrate and a second surface having a chuck-coupling region for coupling the rigid carrier to a chuck. Embodiments also include methods of fabricating a chemical array and include stably associating a flexible array substrate to a rigid carrier and fabricating a chemical array on the stably associated flexible array substrate. Also provided are methods of using chemical arrays produced according to the subject invention and arrays fabricated according to the subject methods, as well as systems and kits for practicing the subject methods.

Before the present invention is described in greater detail, it is to be understood that this invention is not limited to particular embodiments described, as such may, of course, vary. It is also to be understood that the terminology used herein is for the purpose of describing particular embodiments only, and is not intended to be limiting, since the scope of the present invention will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range is encompassed within the invention. The upper and lower limits of these smaller ranges may independently be included in the smaller ranges is also encompassed within the invention, subject to any specifically excluded limit in the stated range. Where the stated range includes one or both of the limits, ranges excluding either or both of those included limits are also included in the invention.

Unless defined otherwise, all technical and scientific terms used herein have the same meaning as commonly understood by one of ordinary skill in the art to which this invention belongs. Although any methods and materials similar or equivalent to those described herein can also be used in the practice or testing of the present invention, the preferred methods and materials are now described. All publications mentioned herein are incorporated herein by reference to disclose and describe the methods and/or materials in connection with which the publications are cited. The citation of any publication is for its disclosure prior to the filing date and should not be construed as an admission that the present invention is not entitled to antedate such publication by virtue of prior invention. Further, the dates of publication provided may be different from the actual publication dates which may need to be independently confirmed.

It must be noted that as used herein and in the appended claims, the singular forms "a", "an", and "the" include plural referents unless the context clearly dictates otherwise.

As will be apparent to those of skill in the art upon reading this disclosure, each of the individual embodiments described and illustrated herein has discrete components and features which may be readily separated from or combined with the features of any of the other several embodiments without departing from the scope or spirit of the present invention. Any recited method can be carried out in the order of events recited or in any other order which is logically possible.

The figures shown herein are not necessarily drawn to scale, with some components and features being exaggerated for clarity.

### Rigid Carriers

As described above, the subject invention includes rigid carriers for holding a flexible substrate. The rigid carriers hold or maintain a flexible substrate in a particular position or manner such that a flexible substrate is stably associated with a surface of the rigid carrier to prevent unintentional movement of the flexible substrate. The rigid carriers find use in a variety of different applications in which flexible substrates are used in manufacturing processes and it is desirable to hold down or stably associate a flexible substrate, i.e., maintain the substrate in a fixed position, without distortion of the flexible substrate and are particularly useful in high throughout manufacturing formats. A particular application in which the subject invention may find use is in the fabrication of one or more chemical arrays on a surface of a flexible chemical array substrate. Embodiments of the subject rigid carriers provide a variety of advantages and benefits, including, uniform hold down of a flexible chemical array substrate onto the carrier, no front side substrate contact, no flexible chemical array substrate edge exclusion, no bending or distortion of the flexible chemical array substrate, no introduction of contaminants, and no hold-down hardware. The subject carriers also stably associate to and release flexible chemical array substrates from the rigid carriers easily and quickly, thereby minimizing processing times.

The subject carriers may be employed with a variety of different flexible and rigid substrates, where the rigid carriers are particularly useful with flexible substrates such as flexible chemical array substrates. Flexible chemical array substrates that may be employed in the practice of the subject invention are described in commonly owned US Patent Application Serial No. 10/285,756 (publication no. 20040086869) and the references cited therein. The subject invention may be used with the flexible chemical array substrates described in the above-described patent application, as well as other flexible chemical array substrates, now known or to be developed. The subject invention also includes the manufacture of flexible chemical array substrates that may be used with the subject carriers.

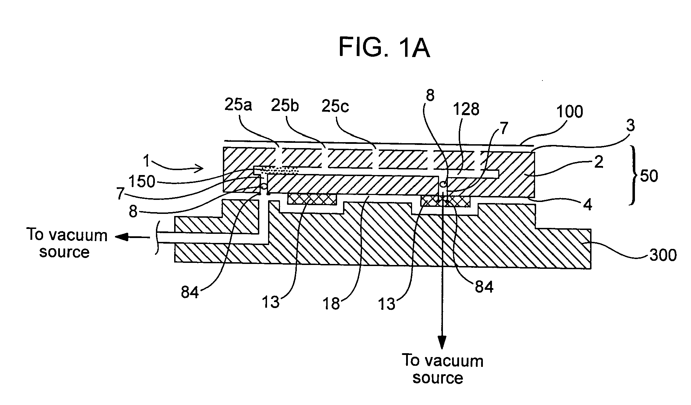

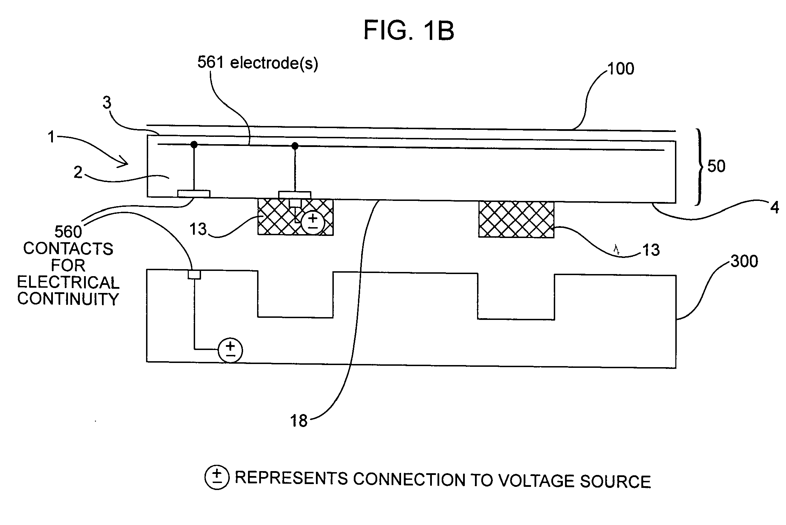

Exemplary embodiments of a rigid array carrier according to the subject invention which may be employed to stably associate a flexible chemical array substrate to hold the flexible chemical array substrate, e.g., hold a flexible chemical array substrate down in a fixed position to prevent unintentional movement of the flexible substrate, in uses where such stable association is desired, e.g., through various manufacturing process steps, is shown in exploded, cross-sectional view at Figs. 1A and 1B, which show a rigid carrier 1 adapted for holding a flexible chemical array substrate onto a surface thereof using vacuum forces and a rigid carrier adapted for holding a flexible substrate onto a surface thereof using electrostatic forces, respectively. Rigid carrier 1 includes a support 2 having a first surface 3 (referred to as a top surface) upon which a flexible chemical array substrate may be received and a second surface 4 (referred to as a bottom surface) that includes a chuck-coupling region 18 for coupling the rigid carrier to a chuck. In the present application, unless a contrary intention appears, terms such as "top" and "bottom" are used in a relative sense only, although they indicate a typical (though not essential) orientation during apparatus use. Accordingly, the rigid carriers are configured to receive a flexible chemical array substrate on a first surface and couple to a chuck at a second surface. As described below, in certain embodiments a rigid carrier is configured as a device having a pedestal supporting a plurality of prongs

The rigid carriers of the subject invention may be constructed from any suitable material or combination of materials, which material(s) may be chosen at least with respect to the conditions to which the carriers may be exposed, e.g., the conditions of any treatment or handling or processing that may be encountered in the use of the carriers, e.g., array fabrication processes. As the subject carriers are rigid carriers, the material of the carriers is also selected to impart rigidity.

One or more materials may be used to fabricate the carriers such that a plurality of materials may be employed in certain embodiments. Examples of materials which may be used to fabricate the subject carriers include, but are not limited to, metals such as stainless steel, aluminum, and alloys thereof; polymers, e.g., plastics and other polymeric materials such as poly (vinylidene fluoride), poly(ethyleneterephthalate), polyurethane, e.g., nonporous polyurethane, fluoropolymers such as polytetrafluoroethylene (e.g., Teflon®), polypropylene, polystyrene, polycarbonate, PVC, and blends thereof; siliceous materials, e.g., glasses, fused silica, ceramics and the like. The rigid carriers may be fabricated from a composite.

The rigid carriers are not limited to any particular shape. The shape of a given carrier may be selected according to a variety of factors, such as the particular manufacturing equipment with which a carrier may be used, the particular flexible substrate with which a carrier may be used, etc. In any event, the shapes of the carriers may range from simple to complex. In certain embodiments, the carriers may be square, rectangular, oblong, oval, triangular, circular, elliptical, etc., as well as other geometric shapes or may be an irregular or complex shape.

The rigid carriers are not limited to any particular size. The size of a given carrier may be selected according to a variety of factors, such as the particular manufacturing equipment with which a carrier may be used, the particular flexible substrate with which a carrier may be used, etc. For example, a carrier shaped generally as a rectangle may have a length of more than about 4 mm and less than about 1 m, e.g., more than about 4 mm and less than about 600 mm, e.g., less than about 400 mm; a width of more than about 4 mm and less than about 1 m, e.g., less than about 500 mm, e.g., less than about 400 mm; and a thickness of more than about 0.5 mm and less than about 100 mm, e.g., more than about 1 mm and less than about 50 mm, e.g., e.g., more than about 2 mm and less than about 25 mm.

Carrier 1 includes a chuck-coupling surface 4 that includes a chuck-coupling region 18 for coupling to a chuck. As such, region 18 includes all the hardware required to couple to a chuck. In certain embodiments, chuck coupling surface 4 is configured to enable a carrier to quickly attach to (and release from) a chuck so that the carrier may be easily and readily coupled to (and decoupled from) a chuck at a manufacturing process station. In this manner, a carrier may be docked at a first chuck for processing, undocked from the first chuck, and transferred to a second chuck and docked at the second chuck for further processing- all the while maintaining a force on the flexible substrate for stably associating the substrate with the carrier. In one aspect, a complementary, mateable coupling surface interface is provided on a chuck surface so that a carrier may be coupled thereto. Carriers may be coupled to a chuck using in any suitable manner. For example, a carrier may be coupled to a chuck with locator pins on either of the carrier or the chuck, which pins may be mateable with corresponding holes on the carrier or chuck. It is important to maintain a repeatable reference of the flexible chemical array substrate to the carrier and to the chuck so that a flexible chemical array substrate is always properly orientated.

As the carriers are configured to stably associate a flexible chemical array substrate to the surface of carrier using a suitable force such as a vacuum, electrostatic force, etc., the rigid carriers include one or more communication conduits 7 or contacts 560 (for electric continuity for electrostatic chucking) for operatively connecting (providing communication, e.g., vacuum communication, gas communication, electrical communication, etc.) the rigid carrier and a chuck 300 when the rigid carrier is coupled to the chuck such that force may be applied.

Fig. 1A shows chuck 300 as a vacuum chuck -connectable to a vacuum source and Fig. 1B shows chuck 300 as an electrostatic chuck connectable to a suitable voltage source. When rigid carrier 1 is docked at the chuck and coupled thereto, vacuum (or voltage) may be provided from the chuck to the rigid carrier, and thus to a flexible substrate 100 positioned on surface 3 of carrier 1, via communication channels 7 (or contacts 560 in the case of electrostatic chucking) so that the flexible substrate may be vacuum and/or electrostatically clamped onto a carrier (i.e., stably associated with a surface of the rigid carrier with vacuum or electrostatic force). It is envisioned that carrier 1 may stably associate a flexible substrate by any of a wide variety of techniques, such as by employing vacuum forces, electrostatic forces, by mechanically holding the substrate on the carrier, and the like, as noted above. As such, chuck 300 may be other than a vacuum chuck; e.g., a chuck may be an electrostatic chuck as shown in Fig. 1B, a hybrid vacuum/electrostatic chuck, a mechanical chuck, an electro-mechanical chuck, and the like, where in many embodiments a given carrier is configured to couple to a number of different types of chucks. For example, a carrier may be adapted to couple to a first chuck configured as a vacuum chuck at a first station of a manufacturing or processing set-up, and adapted to decouple from the first chuck and couple at a second chuck configured as an electrostatic chuck, thus providing versatility and limiting the number of carriers required for a given manufacturing or processing line.

As noted above, in certain embodiments the rigid carriers may be configured to couple to a chuck to generate an electric field between the flexible substrate and the rigid carrier to exert an electrostatic attractive force on the flexible substrate positioned on the carrier surface. Accordingly, in such embodiments, in addition to or in place of a vacuum source, a voltage source may be in communication with the chuck as shown in Fig. 1B. For example, chuck 300 may be an electrostatic chuck for providing an electric field about a flexible substrate 100 positioned on surface 3 of carrier 1 so that the flexible substrate may be electrostatically clamped onto a carrier (i.e., stably associated with a rigid carrier using electrostatic forces). As such, these carriers are adapted for electrical communication with a voltage source to apply an electrical field to a flexible array substrate in association with the carrier. As shown in Fig. 1B, such embodiments include one or more electrodes 561 associated with rigid carrier 1, contacts 560 for electrical continuity between carrier 1 and chuck 300 when so coupled, and chuck 300 (and/or robot end effector portions) in communication with or capable of establishing communicating with a voltage source. The robot end effector portions thus are configured to hold a carrier for transport and couple with a voltage source for stably associating a flexible array substrate with a carrier using electrical energy.

A rigid carrier is thus configured to removably dock at a chuck and establish a connection (vacuum flow connection, electrical connection, gas flow connection, etc.) between the carrier and the chuck so that a vacuum, or the like, may be provided to stably associate a flexible substrate positioned on the carrier. The subject invention is further described primarily with reference to adhering a flexible substrate to a surface of a rigid carrier by vacuum, where such description is not intended to limit the scope the invention as it will be apparent to those of skill in the art that other techniques other than vacuum holding techniques may be employed, e.g., electrostatic chucking and the like.

In many embodiments, the rigid carriers are easily and readily moveable between chucks, e.g., moved between different chucks at different manufacturing stations. Accordingly, embodiments include rigid carriers configured to be removably coupled to a chuck, i.e., the carriers may be chuck-detachable carriers. Accordingly, while certain embodiments may include a carrier permanently coupled to a chuck, many embodiments include carriers that are easily attachable/detachable from chucks. Certain embodiments are configured to maintain a force on a flexible substrate to maintain the stable association between the flexible substrate and the rigid carrier while the carrier/substrate structure is being moved from between chucks, i.e., after decoupling from one chuck and before coupling to another chuck. In this manner, the force for stably associating the flexible substrate to the rigid carrier is not lost during transport of the flexible substrate.

Maintaining a vacuum force on a flexible substrate during movement of the flexible substrate between chucks, e.g., at different manufacturing stations or the like, may be accomplished in any suitable manner. In certain embodiments, a rigid carrier may incorporate a vacuum reservoir 128 to hold vacuum and ensure that a source of vacuum is always available to stably associate the flexible substrate with the rigid carrier, even if a carrier is not coupled to a chuck. The vacuum reservoir may also serve to minimize the time that the vacuum source, such as a vacuum pump, needs to run to maintain a vacuum on a flexible substrate. The volume of a vacuum reservoir may vary, wherein certain embodiments a vacuum reservoir may have a volume that ranges from a small percentage of the internal volume of a carrier to a large percentage of the internal volume of a carrier (e.g., most of the internal volume of the carrier). The vacuum reservoir may also serve to counter any air leaks into the system that may occur, as the air will be pulled into vacuum reservoir 128, thereby maintaining vacuum. In certain embodiments, when the vacuum in the reservoir 128 reaches a certain minimum threshold, the vacuum source may be activated or increased to restore vacuum to the vacuum reservoir 128. The vacuum source may be activated either manually or by control valving (not shown) under the control of a processor, or may be simply controlled via a check valve.

Conduits 7 (or electrical contact 560) may be positioned in any suitable location about carrier 2, so long as communication between the carrier and a chuck may be established when the carrier is coupled to the chuck. In this manner, the carrier "plugs into" a vacuum source (or voltage source) when the carrier is docked at a chuck. Accordingly, the positioning of one or more conduits about a carrier may be a function at least of the configuration of one or more chucks to which it is designed to be coupled. In those embodiments where the carrier is transferred from chuck to chuck- each having a vacuum source, the carrier may plug into a new or different vacuum source every transfer by uncoupling from one chuck/vacuum source and coupling to a different chuck/vacuum source, as described above. In certain embodiments, a robotic arm having end effectors 13 may be employed to transport the carrier/flexible substrate from chuck to chuck and may itself employ a vacuum source to hold the carrier during transport. A carrier may be configured to couple to a robotic arm chuck in addition to or in place of coupling to a separate chuck at a manufacturing station. As illustrated in Fig. 1A, in such embodiments a vacuum conduit may be so positioned about a carrier that the carrier may be configured to communicate or plug into the vacuum source associated with a robot end effector, thereby maintaining a vacuum onto a flexible substrate when the carrier is coupled to a robotic arm end effector. Analogously, as illustrated in Fig. 1B, contacts 560 may be so positioned about a carrier to provide electrical continuity between a contact of a carrier and a contact of a robot end effector which is connected to a suitable voltage source, thereby electrostatically holding a flexible substrate when the carrier is coupled to a robotic arm end effector having such a voltage source connection.

In the embodiment of Fig. 1A, two vacuum conduits are shown, but more or less may be employed, and may be positioned elsewhere about carrier 1 as noted above. In the embodiment of Fig. 1B, more electrical contacts may be employed than shown in the figure, and may be positioned elsewhere about carrier 1 as noted above. Conduits 7 may incorporate a sealable closure 8 to prevent leakage of the vacuum or the like, e.g., a valve, check valve, septum, or the like. In certain embodiments, a check valve may be incorporated into a conduit and a seal may be provided at the conduit opening to minimize air leakage into the system and to maintain vacuum on the flexible substrate for a period of time after the carrier is uncoupled from a chuck, e.g., for transfer to a different chuck. A seal element 84 makes a seal between a conduit of the carrier and a vacuum source or corresponding conduit in a chuck, to minimize air leakage into the system such as into vacuum reservoir 128. If air leaks occur, the vacuum source may be activated to restore vacuum. A getter 150, described in greater detail below, may be employed to minimize any effects of gas leakage.

Surface 3 is configured to support and hold a flexible substrate evenly and with reliability and usually, though not necessarily, is a planar surface. A gasket or the like (o-ring) may be present on surface 3 to prevent vacuum leakage in certain embodiments. In Figs. 1A and 1B, planar surface 3 is shown having a flexible array substrate positioned thereon (such as flexible array substrate 100 described below) to provide a structure 50 that includes a rigid carrier and a flexible substrate. In those embodiments configured for applying electrostatic forces, surface 3 may incorporate an insulator.

One or more orifices or vacuum ports 25, or grooves, or the like, are present at the carrier top surface to provide a vacuum or the like at the surface of the carrier to hold a flexible substrate in place without unintentional movement of the flexible substrate. Orifices 25 are in flow communication with vacuum reservoir 128. For vacuum configurations, at least a manifold will be present to communicate to the holes. This manifold, by virtue of its internal volume, will act as a small reservoir. An additional, or larger reservoir may not be present in all embodiments. Porous carriers having a plurality of orifices may be employed, which plurality may be distributed, e.g., evenly, across surface 3 so that a homogenous distribution of force may be applied over a flexible array substrate surface positioned on the carrier. Such configurations may serve to minimize distortions of stably associated substrates. Channels, surface texture or other structures or features for distributing the vacuum in-between the orifices may be provided at surface 3.

The subject carriers may include one or more additional components or features to prevent vacuum leakage to maintain a suitable vacuum force on a flexible substrate surface. One such example is the use of an O-ring or the like at the carrier surface/substrate interface as noted above. In certain embodiments, a carrier may be equipped with an appropriate quantity of a getter material 150 to maintain vacuum conditions, e.g., a getter 150 may be incorporated into a vacuum reservoir, to maintain a vacuum on a flexible substrate stably associated to a surface of a carrier. For example, over time, the vacuum, e.g., inside the vacuum reservoir, may be degraded by diffusion and/or microleaking of gases. Getters are broadly defined as materials that help maintain vacuum by absorbing, adsorbing or reacting with one or more gases to help maintain a degree of vacuum. Getters are well known in the art and thus will not be described in great detail herein. A getter for use with the subject carriers may be fabricated in any suitable shape such as a simple planar shape or in a more complex three-dimensional shape. A getter for use in the subject carriers may be made from any suitable materials. For example, a metallic gettering agent or the like may be used. Gettering agents that may be used include, but are such as, but are not limited to, Zr-Al-Fe, Zr-V-Fe, or other suitable materials. A carrier may include a getter that is highly porous to facilitate access of gases and to provide high active surface area for sorption.

Carriers (and/or flexible substrates stably associated therewith) may also include a sealing member such as a mechanical clamp and/or locating pins and/or adhesive, or the like, positionable about the perimeter of a flexible substrate held to a carrier surface to maintain a certain degree of vacuum on the flexible substrate, as will be described in greater detail below.

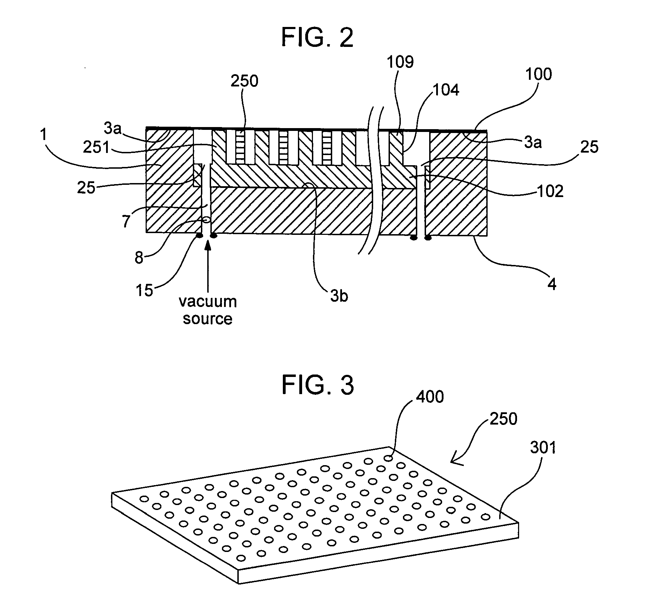

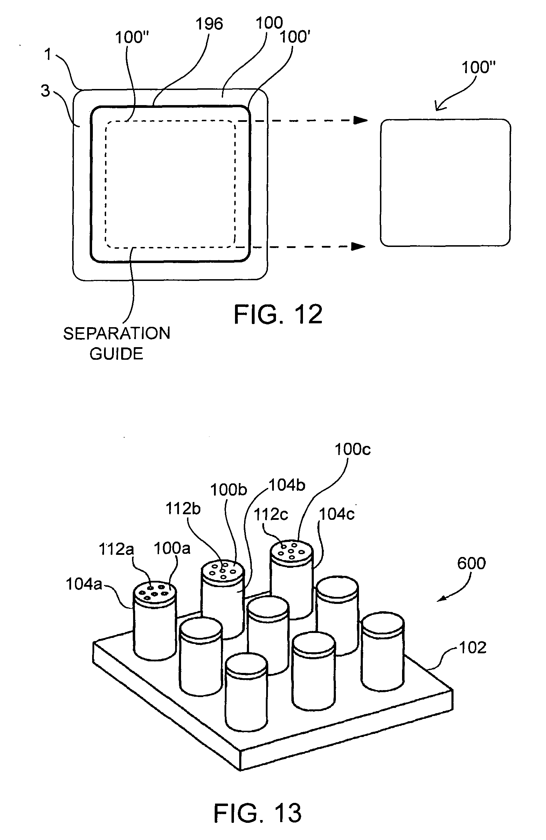

In certain embodiments, the carriers may include a permanently or removably attached device that includes a pedestal supporting a plurality of prongs, as shown in, e.g., Figs. 2 and 13. In certain embodiments, a device that includes a pedestal supporting a plurality of prongs may serve as the rigid carrier of the subject invention and thus be configured as a rigid carrier as described herein.

Pedestal prong devices, as well as methods of making and using such devices are described, e.g., in US Patent Application Serial No. 10/285,756.

A pedestal/prong device (as shown in Figure 2, for example) may be employed as part of an array assembly such that one or more chemical arrays may be fabricated on one or more prongs of the device, e.g., on the top of one or more prongs. The pedestal of device 102 may be any suitable shape. In certain embodiments, pedestal 102 (i.e., the foundation) supporting the prongs may be shaped generally as a rectangular solid (although other shapes are possible), having a length of more than about 4 mm and less than about 1 m, usually more than about 4 mm and less than about 600 mm, more usually less than about 400 mm; a width of more than about 4 mm and less than about 1 m, usually less than about 500 mm, and more usually less than about 400 mm; and a thickness of more than about 0.01 mm and less than about 5.0 mm, usually more than about 0.1 mm and less than about 10 mm and more usually more than about 0.2 and less than about 5 mm. In certain embodiments, the pedestal may have a length and width which is equal to that of any common laboratory sample device, such as no greater than about 150 mm or about 130 mm, by about 100 mm or about 90 mm, to allow compatibility with the well known standard 96, 384, or 1536 well microtiter plate format and/or apparatuses such as fluid handling devices, for use with such common standard laboratory devices. For example, pedestal 102 may have length and width dimensions of about 7.62 cm by about 10.16 cm and may support ninety-six prongs arranged in a format of eight prongs by twelve prongs, e.g., in the same manner as wells of a standard ninety-six well microtiter plate. Each of the ninety-six prongs may be configured to carry a chemical array on a surface of the prong so as to provide ninety-six arrays arranged in an eight by twelve array format in the same manner as wells of a standard ninety-six well microtiter plate.

Prongs may or may not be regularly spaced apart. The prongs may be regularly spaced in certain embodiments and may be positioned to correspond to wells in a multi-well plate, such as a 96-well (or 384-well, or 1536-well) microtiter plate, although other multi-well plates may be used, as well as other spacing formats.

Top surfaces 109 of prongs 104 may (though not always) be substantially flat (i.e., planar surfaces) to facilitate the generation of chemical arrays thereon.

In certain embodiments, prongs 104 may extend in a generally perpendicular direction from pedestal 102, as illustrated in the figure; however, varying designs may have prongs 104 extending at an angle from pedestal 102, e.g., the angle may range from about 75 to about 90 degrees, or possibly from about 60 to about 90 degrees, or even from about 45 degrees to about 90 degrees, or from about 30 degrees to about 90 degrees.

In use, carrier 1 may hold device 251 that includes a pedestal 102 having a plurality of prongs 104. A flexible substrate, such as flexible substrate 100 described below, may be positioned on top surfaces 109 of prongs 104. In such embodiments, the flexible substrate may be stably associated with device 251 during manufacturing processes. In certain embodiments, a mechanical clamp or adhesive may be used at surface 3a to assist in maintaining the flexible substrate in place and/or assist preventing leakage of vacuum on the substrate. Surface 3b of the carrier is substantially flat which may assist in holding surfaces 109 in a flat plane. With device 251 held in carrier 1, surface 4 of carrier 1 may be docked at a chuck such as a vacuum (or electrostatic chuck) so that a vacuum source may be provided to the carrier to stably associate the flexible substrate with the top surfaces 109 of prongs 104 using a vacuum, as well as pull the entire device 251 flat against the surface of the stiffer carrier. In other words, applied force may pull the more compliant multi-prong device fixture down to the stiffer carrier. One or more orifices 25 may be positioned between one or more of the prongs to pull a vacuum at such locations, thus stably associating the flexible array substrate to the prongs. Device 251 may be fixed to the carrier using any suitable means, e.g., friction fit, snap fit, mechanical clamping, and the like, or may be affixed to a carrier using vacuum force, electrostatic force, etc.

In embodiments employing device 251, an optional plate 250 (see for example Fig. 3) that includes a planar support 301 having a plurality of holes 400 shaped complementary to prongs 104 of device 251, may also be employed to support the flexible array substrate in-between the prongs as shown in Fig. 2 to prevent sagging of the flexible substrate at these regions. The plate, if used, may be operatively positioned relative to a pedestal/prong device such that the holes of the plate may receive the prongs. For example, such plates and methods of using such plates which may be adapted for use in the subject invention are described in copending U.S. application Serial No. entitled "Devices and Methods for Contacting Fluid with a Chemical Array", attorney docket no. 10031553-1 to Fredrick, filed June 14, 2004.

In the broadest sense plate 250 may be described as a planar support 301 that includes one or more holes or bores 400 through the support. The holes may be configured to align with the prongs of a pedestal/prong device when a pedestal/prong device and a plate are operatively positioned relative to each other to provide a structure that includes a pedestal/prong device operatively mated with a plate. Plate 250 may accommodate a wide range of prong formats, e.g., by configuring a given plate to correspond to a given prong configuration and/or by only utilizing certain holes of a plate to accommodate a particular prong format.

Fig. 3 shows another view of plate 250 that include support 301 having one or more holes 400 that extend through the entire thickness of support 301. Plate 250 may assume a variety of shapes and sizes, where a given plate may be configured (e.g., sized, shaped, etc.) to be operatively positioned relative to a pedestal/prong device. As noted above and as shown in the figures, each hole of a given plate extends in a thickness dimension of the plate and each hole is open at both ends, i.e., the holes are through holes or bores through a plate, i.e., open channels or passages that extend through the plate.

The number of holes of a fluid contacting plate may vary and may depend on the particular application with which the plate is used, the particular prong format with which it is used etc. The number of holes may range from about 1 to about 500 or more, e.g., 1 to about 100. In many embodiments, the number of holes roughly corresponds to, i.e., is the same as or similar to, the number of prongs of a pedestal/prong device with which it is designed to be used. As such, if the pedestal/prong device includes 1 prong, the plate may include 1 hole, if the pedestal/prong device includes 10 prongs, the plate may include 10 holes, if the pedestal/prong device includes 96 prongs, the plate may include 96 holes, etc. For example, plates may include 2n by 3n holes, where n is some integer such as 4, 8, or 16, or more generally 4x where x is an integer from 1 to 5, 10, or 20 (for example, 5, 6, 7, 8, 9, 10, 11, 12 or 16). The number of holes need not match exactly to the number of prongs with which it is to be used, and may be more or less.

The holes may be arranged in any suitable configuration and may be based at least in part on the particular pedestal/prong device with which it is designed to be used etc. For example, holes may be present as a pattern, where the pattern may be in the form of organized rows and columns of spots, e.g. a grid of holes, across the plate, etc. A fluid contacting plate may be designed to be used with a pedestal/prong device having an x-y grid pattern of prongs as described above, and thus the plate may have holes in the same or analogous grid pattern. For example, a plate may be designed to be used with pedestal/prong device having 96 prongs arranged in a grid pattern and thus the plate may include about 96 holes arranged in the same or analogous grid pattern as the 96 prongs with which it is intended to be used.

As mentioned above, the subject rigid carriers may be used with a wide variety of flexible substrates. Exemplary flexible substrates that may be used with the subject invention are now described.

### Exemplary Flexible Chemical Array Substrates

In general, flexible array substrates that may be used with the subject invention include at least one layer of flexible material, and in certain embodiments may have two or more layers joined together as a "composite", where one or more, e.g., all of the layers, may be flexible. By "flexible is meant that the substrate can be bent 180 degrees around a roller of less than 1.25 cm in radius. The substrate can be so bent and straightened repeatedly in either direction at least about 100 times without failure (for example, cracking) or plastic deformation. This bending must be within the elastic limits of the material. The foregoing test for flexibility is performed at a temperature of 20 °C.. "Composite" in this context may refer to array substrates having a plurality of flexible layers joined together, such as array substrates having a first flexible layer (referenced as a "flexible base") supported on a second flexible layer (referenced as a "flexible support"). In certain embodiments, a composite flexible array substrate may have a flexible base that is between about 5 and about 800 microns thick and a flexible support that is between about 50 microns and about 5 millimeters thick.

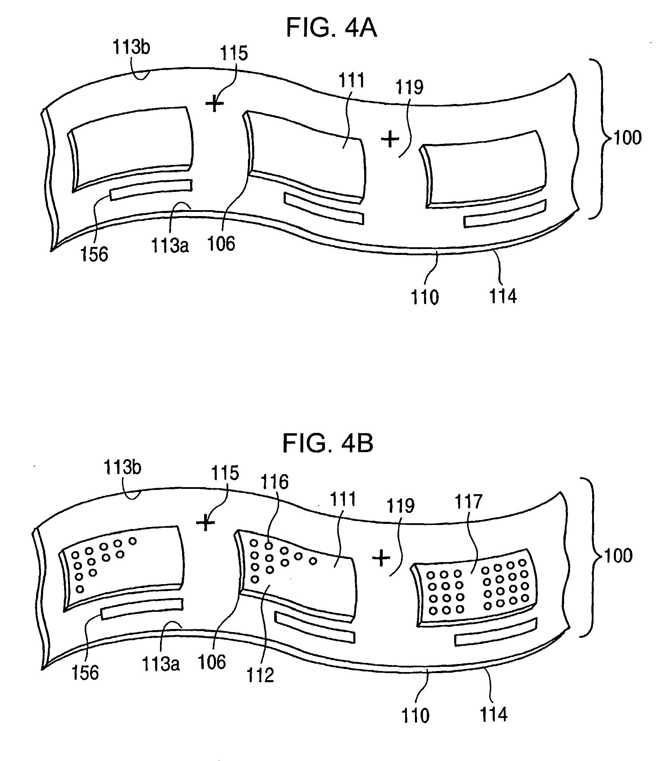

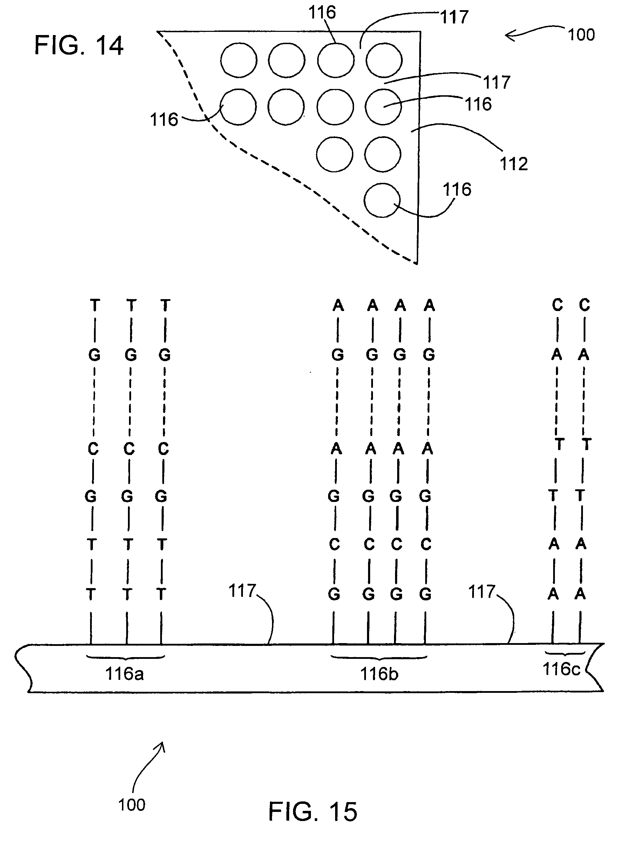

Fig. 4A shows an exemplary embodiment of a flexible array substrate that may be employed with the subject invention. Flexible array substrate 100 includes a flexible support 110 supporting a flexible base 106. One or more arrays 112 may be disposed anywhere on flexible substrate 100, where in many embodiments one or more arrays 112 may be disposed along a front surface 111 of flexible base 106. Fig. 4B shows flexible substrate 100 of Fig. 4A having arrays 112 disposed thereon. Fig. 14 shows an enlarged view of a portion of Fig. 4B showing spots or features and Fig. 15 is an enlarged view of a portion of the flexible substrate of Fig. 14.

The arrays 112 may optionally be separated by inter-array areas 117. The flexible bases may be separated by inter-base areas 119. A consequence of inter-base areas 119 is that the flexible base 106 may support additional layers and/or have surface properties/modifications that are not present on (or different from those on) the flexible support 110. A back side of flexible base 106 is bound directly or indirectly to flexible support 110. While only three flexible bases 106 supporting arrays 112 are shown in Figs. 4A and 4B, it will be understood that flexible support 110may use any desired number of flexible bases 106 such as at least 5, 10, 20, 50, or 100 (or even at least 500, 1000, or at least 3000), an in certain embodiments up to 5,000; 10,000; 50,000; or even more. In an alternate embodiment, flexible base 106 may be in the form of an elongated ribbon supported on the flexible support 110 rather than the individual pieces of flexible base 106 shown in the figures.

Flexible support 110 also has opposite edge margins 113a, 113b adjacent flexible bases 106. Identifiers may be provided along one edge margin 113a of which in the form of informational labels 156. Identifiers such as other optical or magnetic identifiers may be used instead of informational labels 156 which will carry the information. Each identifier may be positioned adjacent an associated array 112, when arrays are thus fabricated, as shown in Figs. 4A and 4B. However, this need not be the case and identifiers, if present, may be positioned elsewhere. Further, a single identifier may be provided which is associated with more than one array 112 and such one or more identifiers may be positioned on a leading or trailing end (neither shown) of flexible support 110. Alignment fiducials 115 may also be present along edge margin 113b, where each fiducial 115 may be associated with a corresponding adjacent array 112. Alternatively, informational labels 156 may be positioned along one or both of the edge margins 113a, 113b on the reverse surface 114 of flexible support 110.

It is to be understood that the rigid carriers of the subject invention may be used to stably associate flexible substrate 100 and/or the layers thereof separately. For example, certain embodiments may include stably associating a first layer such as layer 110 for one or more manufacturing processes and/or stably associating a second layer such as layer 106 with the same or different rigid carrier for one or more manufacturing processes, and/or stably associating first and second layers, such as layer 110 and layer 106, simultaneously with the same rigid carrier, i.e., stably associating layer 110 together with layer 106 associated with it- as in the format shown in Fig. 4A, for one or more manufacturing processes. The same is true for any embodiment of flexible substrate such that any of the layers separately or all of the layers associated together (e.g., a flexible array substrate that includes one or more layers operatively associated together) of a given flexible substrate may be stably associated using a rigid carrier according to the subject invention.

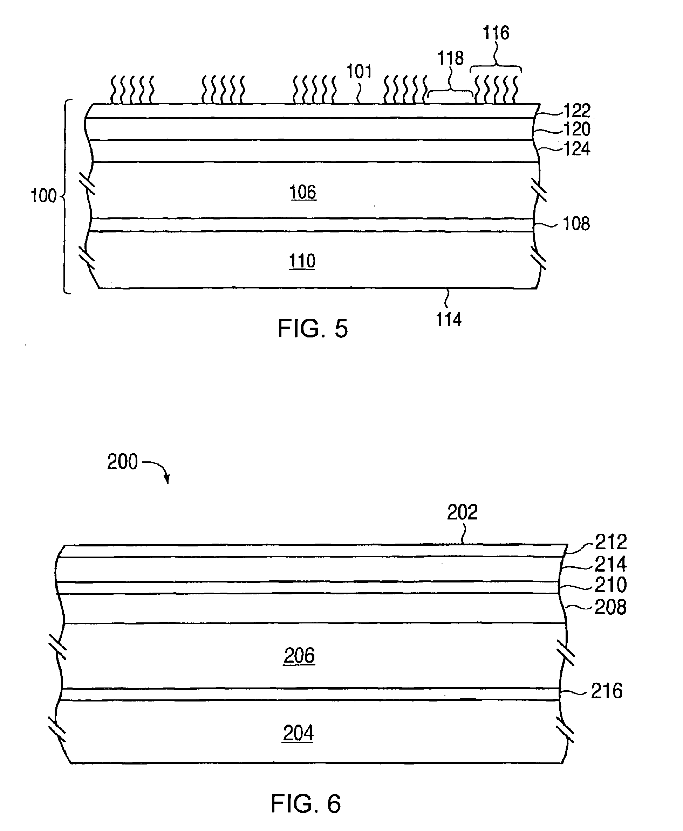

Fig. 5 illustrates a portion of a cross section through flexible array substrate 100 showing that array substrate 100 may have a number of different layers. Flexible support 110 together with flexible base 106 may be joined via an optional intermediate binding layer 108. Any suitable flexible plastic such as a polyolefin film (such as polypropylene, polyethylene, polymethylpentene), polyetheretherketone, polyimide, any of the fluorocarbon polymers or other suitable flexible thermoplastic polymer film may be used for the construction of flexible support 110 and/or flexible base 106.

The material of flexible support 110 may be selected to provide stable dimensional, mechanical, and chemical properties under the conditions flexible support 110 will be used. For example, polynucleotide arrays supported by the flexible support 110 may be subject to elevated temperatures (for example, 60 °C.) for long times (for example, 12 hours) in aqueous environments. Similarly, the material of flexible base 106 may be selected to provide stable dimensional, mechanical, and chemical properties under the conditions to which flexible base 106 will be exposed. For example, conditions for producing surface modifications on flexible base 106 may require high temperatures (over 200 °C.).

Flexible support 110 may have a thickness of more than about 0.05 mm, or more than about 0.2 mm, or more than about 0.5 mm, or more than about 1 mm, or more than about 2 mm (or more than about 5 mm) and less than may have a thickness of more than about 5 microns, or more than about 10 microns, about 15 microns, about 20 microns and less than about 800 microns (or less than about 400,about 250, or about 100 microns). In certain embodiments, the flexible array substrate may be at least about 5 microns thick and less than about 800 microns thick.

Array substrate 100 may also include an optional reflective layer 120 and an optional optically transparent layer in the form of a glass layer 122 such that in certain embodiments, a plurality of features 116, optionally separated from each other by interfeature areas 118, may be produced on the top surface 101 of array substrate 100 and include probes bound to glass layer 122. Reflective layer 120 may be aluminum, silver, gold, platinum, chrome, tantalum, or other suitable metal film deposited by vacuum deposition, plasma enhanced chemical vapor deposition or other methods onto flexible base 106 or onto an optional intermediate bonding layer 124 or onto layer 110 in certain embodiments. Bonding layer 124, if used, may be any suitable material which is flexible at the thickness used and bonds to both flexible base 106 and reflective layer 120. Glass layer 122 (which term is used to include silica) may be deposited onto reflective layer 120 by sputtering, plasma enhanced chemical vapor deposition or similar techniques such as are known in the art. Glass layer 122 may optionally be used without reflective layer 120. Glass layer 122 may have any suitable thickness, for example greater than about 1, about 10 or about 100 nm, and less than about 1000, about 700, or about 400 nm and may have a thickness about 1/4 wavelength of the light used to illuminate array features during reading, or an odd multiple of that amount. For example, 40 to 200 nm, or 60 to 120 nm (or even 80 to 100 nm), or an odd integer multiple of any of the foregoing thickness ranges (for example, 300 nm may be used) provided the layer is not so thick that array substrate 100 is no longer flexible.

Reflective layer 120, and bonding layers 124 and 108 may each have a thickness of less than about 250 nm, or even less than about 50, about 20, about 10, about 5 or about 1 nm (for example, more than about 0.1 or about 0.5 nm). In one example, bonding layers 124 and 108 each may be about 10 nm thick. Reflective layer 120 may be chosen to have a thickness such that it is opaque to the wavelength of the light used for illuminating the features during array reading. In certain embodiments, reflective layer 120 may be less than about 1750 nm thick and may be at least about 40 nm thick. In certain embodiments, reflective layer 120 may be less than about 750 nm thick and may be at least about 325 nm thick.

In the above configuration of the flexible array substrate 100, the use of a glass layer 122 allows the use of conventional chemistries for substrate coating, feature fabrication, and array usage (for example, conditions used for performing hybridization assays). Such chemistries are well known for arrays on glass substrates, as described in the references cited herein and elsewhere. However, other transparent materials may be used. Furthermore, using reflective layer 120 not only may provide the useful characteristics mentioned in patent application Ser. No. 09/493,958, but may avoid undesirable optical characteristics of the plastic flexible base 106 (for example, undesirable fluorescence, and in the case of a flexible base that absorbs the incident light energy, excessive heating and possible melting of the plastic material forming the flexible base). Reflective layer 120 allows for the ability to use a material for flexible base 106 that may have a high fluorescence and/or high absorbance of incident light. For example, the plastic material used in the flexible base 106 may have a fluorescence of at least five or ten (or even at least: twenty, fifty, one-hundred, or two-hundred) reference units, and/or an absorbance of the illuminating light used to read arrays 112 of at least 5%, 10%, 20%, or 50% (or even at least 70%, 90% or 95%).

Use of a non-reflective opaque layer (for example, a suitably dyed plastic or other layer) in place of reflective layer 120 also allows the use of the foregoing materials for flexible base 106, although in such a case some heat may be generated in the opaque layer. A reflective layer 120 or a non-reflective opaque layer disposed between flexible base 106 and the optically transparent layer (e.g., glass layer 122), may block at least 10% (or even at least 20%, 50%, 80%, 90% or 95%) of the illuminating light incident on the glass layer 122 from reaching the flexible base 106. A non-reflective opaque layer may reflect less than 95%, 90%, 80%, or 50% (or even less than 10%) of the illuminating light. Where neither a reflective layer 120 nor opaque layer is present, a flexible base 106 that emits low fluorescence upon illumination with the excitation light may be employed, at least in the situation where the array is read by detecting fluorescence. Flexible base 106 in this case may emit less than 200, 100, 50, or 20 (or even less than 10 or 5) reference units. Additionally in this case, flexible base 106 may be relatively transparent to reduce the absorption of the incident illuminating laser light and subsequent heating if the focused laser beam travels too slowly over a region. For example, the flexible base 106 may transmit at least 5%, 10%, 20%, or 50% (or even at least 70%, 90%, or 95%), of the illuminating light incident on the optically transparent layer. Note that all reflection and absorbance measurements herein, unless the contrary is indicated, are made with reference to the illuminating light incident on the optically transparent layer for reading arrays 112 and may be measured across the entire integrated spectrum of such illuminating light or alternatively at 532 nm or 633 nm or other suitable wavelength depending on the conditions used for performing the array binding analyses.

In certain embodiments, array substrates may include a protective layer that provides resistance to the conditions under which the array substrates are manufactured and/or used. The protective layer provides increased robustness for the array substrates to a broad range of conditions, allowing greater flexibility in choosing conditions of manufacture or use, e.g. choice of reagents during array fabrication and/or array hybridization. The protective layer may include a metal oxide layer. In embodiments in which array substrates include a reflective layer that includes a metal layer, the protective layer of metal oxide may be supported on the metal layer. The metal oxide layer may, in certain embodiments, include the oxide of the metal used in the reflective layer. However, in embodiments having transparent layer supported on the metal oxide layer, the composition of the transparent layer may be different than the composition of the metal oxide layer.

Referring now to Fig. 6, a cross-section of a flexible array substrate 200 having a protective layer is illustrated. Array substrate 200 includes, in order, an optional support 204, a base 206, a metal layer 208, a metal oxide layer 210, and an optional transparent layer 212. An optional Bragg reflector 214 comprising multiple dielectric layers may be supported on the metal oxide layer 210. The optional support 204, if present, may be made of any suitable material or combination of materials, and may be rigid such as a glass slide, a metal plate or plastic bar, or a rigid combination of such materials. The optional support, if present, may be a flexible support, such as described elsewhere herein. In particular embodiments, the flexible support comprises one or more materials such as polyetheretherketone (PEEK), polyimide, polyetherimidine, polypropylene, polyacrylate, polymethacrylate, polyesters, polyolefins, polyethylene, polytetrafluoro-ethylene, poly (4-methylbutene), polystyrene, or poly(ethylene terephthalate). An optional bonding layer 216, if used, may be any suitable material which bonds to both of the immediately adjacent materials. A transparent layer 212 may be incorporated into the array substrate as described herein to enhance signal during interrogation of the array and to provide functional groups on the array substrate surface appropriate for binding substances, e.g. biomolecules or other molecules, thereto. The surface 202 of the array substrate 200 may be modified to provide such functional groups by methods well known in the art.

Certain embodiments of flexible array substrates having a protective layer may include, in order, a base, a metal layer supported on the base, and a metal oxide layer supported on the metal layer. The base may be made of any suitable material or combination of materials. The base may be rigid, such as a glass slide, a metal plate or plastic bar, or a rigid combination of such materials. The base may be a flexible base, such as described elsewhere herein. In certain embodiments, the flexible base may include a flexible plastic sheet comprising a material such as polyetheretherketone (PEEK), polyimide, polyetherimidine or polypropylene. The base may support a metal layer that may serve as a reflective layer or a portion of a reflective layer. The metal layer may support the metal oxide layer.

In certain embodiments, particular metals of choice for the metal layer include chromium, aluminum, titanium, and tantalum, although the metal may be selected from any suitable metal, particularly an elemental metal having a reflectivity of at least 5% when deposited as a smooth layer on a base, or more particularly at least about 10%, 20%, 30%, 40%, or 50%. For the metal oxide layer, oxides of chromium, aluminum, titanium, and tantalum may be used; oxides of these metals provide resistance to degradation of the array substrate, e.g. during manufacture or use. Certain embodiments may include a layer of chromium oxide supported on a layer of chromium metal supported on a base. In certain embodiments the metal oxide layer may contain less than about 1% by mass of an oxide of either silicon or aluminum. The metal oxide layer may include an oxide of a metal selected from, e.g., chromium, aluminum, titanium, tantalum, and the like. The array substrate may optionally include other layers or materials, such as one or more optional bonding layers, transparent layers, supports, or the like.

Flexible chemical array substrates that may be employed with the subject invention include those described in US Patent Application Serial Nos. 10/284,090; 10/285,759; 10/286,117; 10/286,089; 10/286,319; 10/285,756; 10/032,608; 10/037,757 and 10/167,662, and the references cited therein.

### Methods of Processing Chemical Arrays

The subject invention includes methods for processing chemical arrays. In certain embodiments, such processing includes manufacturing chemical arrays and specifically for manufacturing chemical arrays on flexible array substrates. Embodiments of the subject methods include stably associating (vacuum, electrostatically, etc.) the flexible array substrate to a rigid carrier to keep the flexible substrate flat and in a fixed position on the carrier surface. By so doing, array fabrication may be done with high accuracy. In certain embodiments, use may also be made of one or more sealing members such as adhesive and/or a mechanical clamp. Embodiments of the subject invention relate to an apparatus and method to automate the handling and transporting of flexible array substrates for array fabrication processing operations.

As will be apparent to those of skill in the art, fabricating chemical arrays on flexible supports is challenging due to the flexibility of the substrate and the need to fabricate the chemical arrays at precise locations on the flexible substrate. For example, one such challenge involves supporting the flexible substrate in the manufacturing environment in a manner that can maintain a flexible substrate in a fixed position and thereby prevent unintentional movement of the substrate, and doing so in a manner that prevents bowing or other distortion of the flexible substrate, contamination of the substrate, etc.

Embodiments of the subject invention provide methods of fabricating one or more chemical arrays at precise locations of a flexible substrate such that the flexible substrate may be suitably supported in a manufacturing environment in a manner that can maintain the flexible substrate in a fixed position, thereby preventing unintentional movement of the substrate during array fabrication. Embodiments of the subject methods provide methods of array fabrication on flexible substrates that prevent bowing or other distortion of the flexible substrate or contamination of the substrate and the subject methods reduce the amount of human intervention while increasing throughput. The subject methods provide significant advantages described herein, e.g., the accurate and precise control of force applied to a flexible array substrate to stably associate the flexible substrate to a rigid carrier so as not to damage substrate.

Chemical arrays include a plurality of addressable molecules or probes (e.g., binding agents or members of a binding pair) generated on a surface of a substrate in the form of an "array" or pattern. Embodiments of the subject invention include array assemblies that include a device having a pedestal structure supporting a plurality of prongs, wherein at least one chemical array is present on a surface of at least one prong of the device. A chemical array may be fabricated on a surface of a flexible support which flexible substrate having the chemical array thereon may then be affixed to foundation such as to a surface of a prong, or a chemical array may be fabricated on a flexible substrate affixed to a pedestal/prong device prior to array fabrication on the flexible substrate.

Chemical arrays include at least two distinct polymers that differ from each other in terms of molecular structure attached to different and known locations on a carrier (substrate) surface. For example, where the chemical moieties are polymers, they differ by monomeric sequence. Each distinct polymeric sequence of the array may be present as a composition of multiple copies of the polymer on a substrate surface, e.g., as a spot or feature on the surface of the substrate. The number of distinct polymeric sequences, and hence spots or similar structures, present on the array may vary, where a typical array may contain more than about ten, more than about one hundred, more than about one thousand, more than about ten thousand or even more than about one hundred thousand features in an area of less than about 20 cm² or even less than about 10 cm². For example, features may have widths (that is, diameter, for a round spot) in the range from about 10 µm to about 1.0 cm. In other embodiments, each feature may have a width in the range from about 1.0 µm to about 1.0 mm, usually from about 5.0 µm to about 500 µm and more usually from about 10 µm to about 200 µm. Non-round features may have area ranges equivalent to that of circular features with the foregoing width (diameter) ranges. At least some, or all, of the features are of different compositions (for example, when any repeats of each feature composition are excluded, the remaining features may account for at least about 5%, 10% or 20% of the total number of features). Interfeature areas will typically (but not essentially) be present which do not carry any polynucleotide (or other biopolymer or chemical moiety of a type of which the features are composed). Such interfeature areas may be present, for example, where the arrays are formed by processes involving drop deposition of reagents, but may not be present when, for example, photolithographic array fabrication process are used. It will be appreciated though, that the interfeature areas, when present, could be of various sizes and configurations. The spots or features of distinct polymers present on the substrate surface are generally present as a pattern, where the pattern may be in the form of organized rows and columns of spots, e.g. a grid of spots, across the substrate surface, a series of curvilinear rows across the substrate surface, e.g. a series of concentric circles or semi-circles of spots, and the like.

In the broadest sense, the chemical arrays are arrays of polymeric or biopolymeric ligands or molecules, i.e., binding agents, where the polymeric binding agents may be any of: peptides, proteins, nucleic acids, polysaccharides, synthetic mimetics of such biopolymeric binding agents, etc. In many embodiments of interest, the arrays are arrays of nucleic acids, including oligonucleotides, polynucleotides, cDNAs, mRNAs, synthetic mimetics thereof, and the like.

The arrays may be fabricated using any convenient protocol. Various methods for forming arrays from pre-formed probes, or methods for generating the array using synthesis techniques to produce the probes *in situ,* are generally known in the art. For example, *in situ* fabrication methods are described in US 5,449,754 for synthesizing peptide arrays, and in US 6,180,351 and WO 98/41531 and the references cited therein for synthesizing polynucleotide arrays. Further details of fabricating biopolymer arrays are described, e.g., in US 6,242,266, US 6,232,072, US 6,180,351, and US 6,171,797. Other techniques for fabricating biopolymer arrays include known light directed synthesis techniques. Arrays may be fabricated using drop deposition from pulse jets of either polynucleotide precursor units (such as monomers) in the case of *in situ* fabrication, or the previously obtained polynucleotide (see for example U.S. Patent Nos: 6,242,266, 6,232,072, 6,180,351, 6,171,797, and 6,323,043; and U.S. Patent Application Serial No. 09/302,898 filed April 30, 1999 by Caren et al., and the references cited therein). Other drop deposition methods may be used for fabrication. Also, instead of drop deposition methods, photolithographic array fabrication methods may be used such as described in, for example, U.S. Patent Nos. 5,599,695, 5,753,788, and 6,329,143. Interfeature areas need not be present, particularly when the arrays are made by photolithographic methods as described in those patents.

In general, embodiments of the subject methods include positioning a flexible array substrate, upon which it is desired to dispose one or more chemical arrays, on a surface of a rigid carrier of the subject invention- which embodiments may include positioning a flexible array substrate on a foundation such as a pedestal/prong device which is itself associated with a carrier. Before or after positioning a flexible array substrate on a surface of a rigid carrier, the chuck coupling region is aligned with a mateable region of a chuck and coupled to the chuck to provide flow communication between a vacuum source, voltage source, etc., associated with the chuck, and the carrier. The flexible substrate is then stably associated to the rigid carrier and one or more processing steps related to chemical array fabrication may be performed on the stably associated flexible array. The below-described general array fabrication methods may be employed to fabricate chemical arrays on a surface of a flexible array substrate to produce array assemblies and may be used in array fabrication protocols wherein previously obtained moieties are deposited at the desired locations on a flexible array surface (such as the deposition of polynucleotides), or may be used to synthesize the desired moieties (such as polynucleotides) in an *in situ* synthesis method such as for the *in situ* synthesis of polynucleotides.

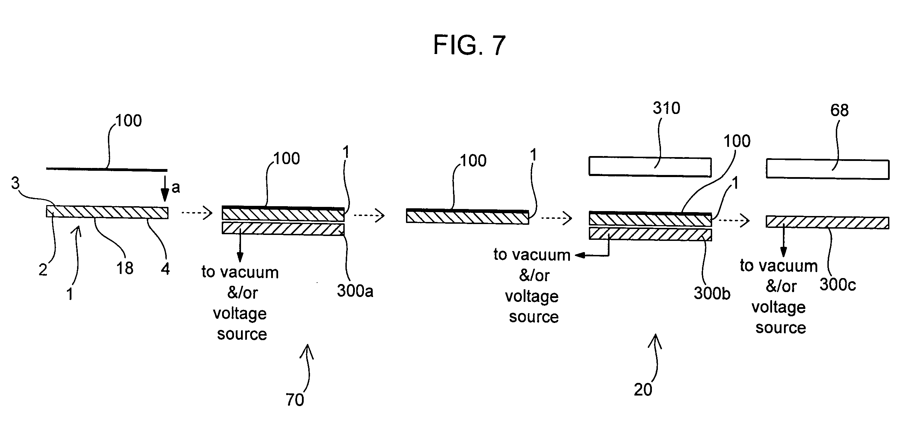

Fig. 7 illustrates array fabrication methods according to the subject invention where array fabrication makes use of different array fabrication sections, a first section having process station 70 and chuck 300a and a second station having process station 20 and chuck 300b. An optional third station 68 may be included in certain embodiments. It will be apparent that the subject methods may be readily adapted for use with any number of sections and stations from as few as a single section to multiple section such as about 3, about 4 about 5 or more section, e.g., 10 or more, e.g., 20 or more.

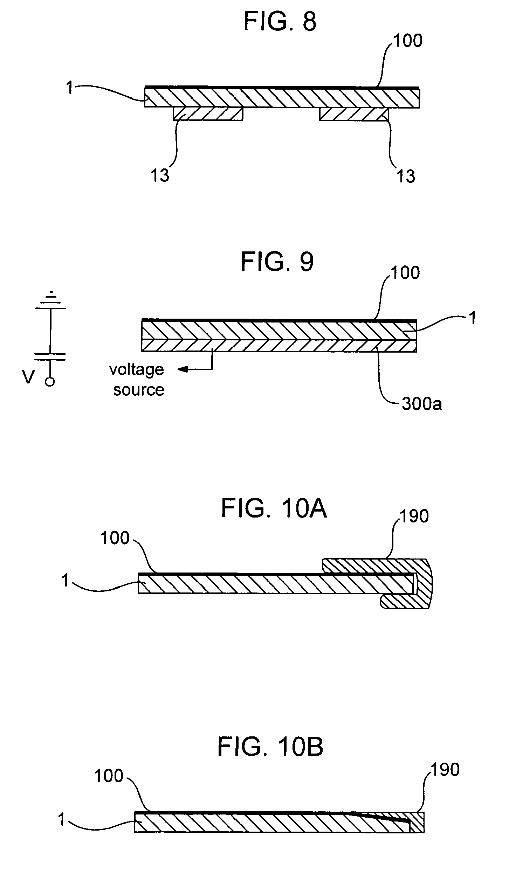

A robotic arm, which may be under the control of a processor, may be employed for transporting a carrier and/or carrier/flexible substrate structure to appropriate locations for processing, e.g., to different stations of a manufacturing line. As shown in Fig. 8, an end-effector 13 connected to an end of the robotic arm (not shown) may be adapted to receive the carrier 1 for transport. The end-effector includes a mechanism for gripping the carrier, such as a vacuum chuck, electrostatic chuck, or the like, and is so adapted. In certain embodiments, a robotic arm may remain in contact with a carrier throughout the array fabrication process such that is may be adapted to couple to a chuck at a processing station, which in turn couples the carrier to the chuck, as shown for example in Figs. 1A and 1B. In other embodiments, a carrier/flexible array structure may be released from the end effector at a processing station, the robotic arm moved a distance from the carrier structure during any processing of the flexible substrate and then the robotic arm may be moved back into position to retrieve the carrier structure from the station and transport it to another location.

Embodiments may include, at the beginning of array fabrication processing, a robotic arm that may be configured to access a selected flexible array substrate positioned on a rigid carrier from a storage rack using a vacuum chuck incorporated into an end effector, or the like, to retain the carrier/flexible array substrate structure on the robotic arm. The robotic arm may be motorized and under the control of a processor. After the carrier/flexible array substrate structure is secured to the robotic arm, the carrier/flexible array substrate structure may be transported from the storage rack to a selected workstation by the robotic arm where some or all aspects of array fabrication may occur. The robotic arm may also be used in a like-manner to transport a carrier/flexible array substrate structure between different sections or stations of an array fabrication processing system.

In a first step, a flexible array substrate is positioned on flexible substrate receiving surface 3 of carrier 1 such as brought into position in the direction of arrows "a". This step may be performed before or after the carrier is docked and coupled to a chuck 300a at first process station 70. As described above, certain embodiments include the use of a pedestal/prong device such that a pedestal/prong device may be received by carrier 1 and a flexible array substrate may be positioned over the prongs of the pedestal/prong device (see Fig. 2), which order may be altered in certain embodiments. As noted above, a carrier/flexible array substrate structure may be stored in a storage rack until an appropriate time for processing- at which time retrieval of the carrier/flexible array substrate structure may occur, e.g., using an automated robotic arm as described above.

In embodiments using a pedestal/prong device during array fabrication processes, an optional plate 250 that includes a planar support 301 having a plurality of holes 400 shaped complementary to prongs 104 of device 251, may also be employed to support the flexible array substrate in-between the prongs (see Fig. 2). The plate, if used, may be operatively positioned relative to a pedestal/prong device such that the holes of the plate may receive the prongs prior to positioning a flexible array substrate over the pedestal/prong device.

In certain embodiments, following placement of a flexible array substrate onto a surface of a carrier, the perimeter of the substrate may be sealed to the carrier to prevent leakage at the perimeter which leakage may compromise the vacuum applied to the flexible substrate. A sealing member may be used for this purpose such as a mechanical clamp or clip, a tack, a pin, adhesive, including adhesive tape, and the like. Perimeter sealing may be done manually or automatically at any suitable time during array fabrication. Since one or more sealing members may be employed to seal the perimeter of a flexible substrate, sealing members may be characterized as perimeter sealing members.

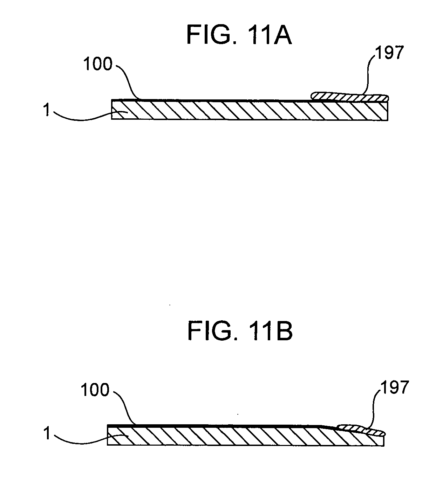

Figs. 10A and 10B show mechanical clamp 190 positioned about the flexible substrate perimeter. Accordingly, the clamp may be opened and the carrier/substrate structure 50 may be positioned within the opened clamp, which clamp then may be closed about the structure to hold the perimeter of the substrate to the carrier. As shown in Fig. 10B, the carrier may have a tapered edge so that the clamp is not above the surface of the flexible array substrate, i.e., the flexible array substrate is the highest surface. Figs. 11A and 11B show analogous embodiments using adhesive tape 197. Tape 197 may be single sided or double sided adhesive tape. As shown in Fig. 11B, the carrier may have a tapered edge so that the tape is not above the surface of the flexible array substrate, i.e., the flexible array substrate is the highest surface.

In certain embodiments, a sealing member may be in the form of adhesive which may be permanent or temporary. Any suitable adhesive may be used, such as curable adhesives, such as UV curable adhesives, heat curable adhesives, and the like. Adhesives that may be employed include, but are not limited to, cyanoacylate adhesives, acrylic adhesives, epoxy adhesives, polyurethane adhesives, silicone adhesives, phenolic adhesives, polyimide adhesives, hot melt adhesives, plastisol adhesives, polyvinyl acetate adhesives, etc. Fig. 12 shows an embodiment wherein adhesive 196 is applied about some or all of the perimeter of the flexible substrate 100. In certain embodiments, after completion of array fabrication, the applied adhesive may be removed by applying a stimulus to dissolve or melt the adhesive. As such, adhesives that are capable of changing from a first state such as a sealable or attachment state to a second unsealable or detachable state in response to an applied stimulus may be employed, e.g., adhesives that are dissolvable or meltable (in response to an applied stimulus). Any suitable stimulus may be employed depending on the particular adhesive, e.g., light, heat, abrasion, any suitable adhesive removal agent such as any suitable adhesive solvent, etc.

Fig. 12 illustrates another manner of using adhesive 196 that employs additional or excess area about the flexible array substrate for the application of adhesive, which excess may remain on the carrier while a portion of the flexible array substrate having the chemical arrays thereon may be separated from the excess, adhesively adhered portion. The separated portion may then be used in an array assay. As illustrated at Fig. 12, a flexible array substrate 100 may include adhesive-application area 100' and chemical array area 100". During array fabrication, adhesive 196 may be applied to region 100'. Region 100" may optionally be additionally stably associated to the carrier according to the subject methods, e.g., using a vacuum, etc., and one or more chemicals arrays may be fabricated on a surface of the substrate defined by region 100". Following the fabrication of one or more chemical arrays, region 100" may be separated or removed, cut-away, torn away, etc., from region 100', as shown by the dashed arrows. Region 100" may then be used in an array assay or subjected to further processing, e.g., attached to prongs of a pedestal/prong device. Adhesive 196 may then be removed from the carrier if it is desired to re-use the carrier.

Either before, during or after a flexible array substrate is positioned on carrier 3, the chuck coupling region 18 of surface 4 of the carrier is operatively mated with a corresponding surface of chuck 300a to couple the carrier to the chuck to enable pressure to be applied to a surface of flexible substrate 100 by the vacuum and/or voltage source associated with chuck 300a. Fig. 7 shows coupling of carrier 1 to chuck 300a after flexible array substrate 100 is positioned on carrier 1, but this need not be the case as noted above. Coupling may include providing electrical connections, vacuum connections, etc.

Once the carrier with a flexible substrate thereon is coupled to chuck 300a, flexible substrate 100 held against the carrier with sufficient force to stably associate the substrate with the carrier and hold the substrate in place on the carrier without distortion of the flexible substrate. Stable association may be accomplished using any suitable technique, e.g., vacuum force, electrostatic force, vacuum/electrostatic forces, and the like, as described above. Accordingly, once coupled, a vacuum source or the like is actuated to secure the flexible array substrate to the carrier. The vacuum may be applied at a range from about 13 psia to about 0 psia, e.g., from about 10 psia to about 0 psia, e.g., from about 5 psia to about 0 psia.

As shown in Fig. 9, if electrostatic forces are employed to stably associate the flexible substrate with a rigid carrier, a suitable voltage is applied to stably associate the flexible substrate to the rigid carrier. By applying a voltage V to one or more electrodes (incorporated into the carrier and which may be insulated by a dielectric film, the flexible substrate is thus attracted to the carrier with an electrostatic force. The voltage may vary depending on the particulars of the flexible substrate, chuck design, etc.

Once the flexible substrate is stably associated with the rigid carrier, processing of the substrate may begin. For example, one or more stations 70 of the first section may be a substrate treatment station for functionalizing a surface of the stably associated flexible array substrate, where such fuctionalization make occur prior to fabricating a chemical array on the substrate. Treatment fluids may be contacted with the substrate using any suitable protocol for contacting a fluid with a surface of a substrate. A treatment station may include one or more immersion tanks (or flow cells) for immersing the stably associated flexible substrate in the appropriate chemicals, e.g., for a silyation process or the like, or may include any other apparatus for contacting a fluid with a surface of a substrate such as pipette, syringe, or a fluid drop deposition head retainer and a drop deposition system in the form of a pulse jet head system or any other fluid contacting device for contacting the substrate surface with appropriate chemicals for fuctionalization. A pulse jet head system may be analogous to that described herein and may include about one, about two, about three or more (e.g., about ten or more) pulse jet heads which deliver drops of fluid onto the surface of the substrate so as to functionalize that surface. Drops may be delivered from a pulse jet head while the substrate is advanced beneath it.

A treatment station provided to coat a surface of a stably associated flexible substrate with a silane linking layer, may use a single silane or a mixed silane layer, using a plurality of treatment stations which together make-up a treatment system. Such silane layers and the details of their formation are described, for example, in U.S. Pat. Nos. 6,235,488 and 6,258,454 and US application publication no. 20030108726, and the references cited therein. Silane layers are particularly useful for forming arrays thereon using the *in situ* array fabrication method described herein. A surface treatment system may include one or more of the following treatment stations: a sonication station, an oven station; reagent stations in the form of a nitric acid bath, silylation bath, hydroboration bath, and NaOH/H₂O₂ bath; as well as rinse stations for example in the form of two water baths. Details of the solutions and procedures may be found in the foregoing references and elsewhere, such as for example in U.S. Pat. Nos. 6,319,674 and 6,444,268.

Once processing is complete at station 70, the carrier/flexible substrate structure may then be transported to a second station 20 for further processing, as shown in Fig. 7. For example, array fabrication, e.g., by in situ synthesis, may take place at station 20. In many embodiments, the holding force (i.e., the force used to stably associate the substrate with the rigid carrier) is maintained on the flexible substrate during movement between the stations. As described above, a vacuum reservoir or the like, or a vacuum or voltage source associated with a robotic arm to which the carrier is coupled, may serve to maintain the holding force at times when the carrier/flexible substrate is un-coupled from a chuck at a station. Other manners of holding the flexible substrate to the carrier may also be employed, as described herein (e.g., adhesive, mechanical clamping, etc.).

To transport the carrier/flexible array substrate from station 70 to station 20, the carrier is uncoupled from chuck 300a. The vacuum source (or voltage source) may be turned off at this time and/or valves may be closed to prevent flow to the carrier. However, as noted above, the force used to stably associate the flexible substrate with a rigid carrier may be maintained in certain embodiments even if connection to the vacuum and/or voltage source associated with the chuck is terminated.

The second section of the apparatus of Fig .7 includes array fabrication station 20 and includes chuck 300b to which the carrier having the flexible array substrate may be coupled. At this station, one or more addressable sets of probes are fabricated onto the flexible array substrate (see for example Fig. 4B). An optional flood station 68 may be provided which may be used to expose the entire surface of the flexible array substrate, when positioned at station 68, to a fluid, e.g., used in the *in situ* process, and to which all features must be exposed during each cycle (for example, oxidizer, deprotection agent, and wash buffer). In the case of deposition of a previously obtained polynucleotide, flood station 68 need not be present.

The chuck coupling region 18 of surface 4 of the carrier is thus operatively mated with a corresponding surface of chuck 300b at station 20 to couple the carrier to the chuck to enable pressure to be applied to a surface of flexible substrate 100 by the vacuum and/or voltage source associated with chuck 300b, in a manner analogous to that described above for station 70.

Once the carrier with a flexible substrate thereon is coupled to chuck 300b, a vacuum force, electrostatic force, or the like, may be provided to the flexible substrate 100 using chuck 300b. Stable association of the flexible substrate to the rigid carrier at station 300b may be accomplished using any suitable technique, e.g., vacuum force, electrostatic force, both vacuum/electrostatic forces, and the like. Accordingly, embodiments include actuating a vacuum source or the like to achieve a pressure or holing force on the flexible substrate, analogous to that described above.

Once the flexible substrate is stably associated to the rigid carrier at station 20, processing at this station may commence. As described above, any suitable manner of providing one or more chemical arrays on a surface of a flexible support may be employed such that an addressable collection of probes may be attached to the substrate surface using any suitable methods that are well known in the art of array fabrication, including whole polymer deposition methods, *in situ* synthesis methods, photolabile synthesis methods using photomasks, ink-jet deposition methods, etc. Such methods are described in the following publications and the references disclosed therein, and may be readily adapted to be used in accordance with the invention described herein. For example, *in situ* synthesis protocols may be employed that may be carried-out by way of highly automated methods such as methods that employ pulse-jet fluid deposition technology in which thermal or piezo pulse jet devices analogous to inkjet printing devices are employed to deposit fluids of biopolymeric precursor molecules, i.e., monomers, onto a surface of the flexible array substrate. In those instances in which an *in situ* synthesis approach is employed, conventional phosphoramidite synthesis protocols may be used. In phosphoramidite synthesis protocols, the 3'-hydroxyl group of an initial 5'-protected nucleoside is first covalently attached to substrate surface. Synthesis of the nucleic acid then proceeds by deprotection of the 5'-hydroxyl group of the attached nucleoside, followed by coupling of an incoming nucleoside-3'-phosphoramidite to the deprotected 5' hydroxyl group (5'-OH). The resulting phosphite triester is finally oxidized to a phosphotriester to complete the internucleotide bond. The steps of deprotection, coupling and oxidation are repeated until a nucleic acid of the desired length and sequence is obtained. In this manner, a series of fluid droplets, each containing one particular type of reactive deoxynucleoside phosphoramidite is sequentially applied to each discrete array feature by a fluid drop deposition head.

Station 20 may include a drop deposition system in the form of a dispensing head 310 which may be retained by a head retainer (not shown). Head system 310 may contain one or more (for example, two or more) heads mounted on the same head retainer. Each such head may be of a type commonly used in an ink jet type of printer and may, for example, have one hundred fifty drop dispensing orifices in each of two parallel rows, six chambers for holding polynucleotide solution communicating with the three hundred orifices, and three hundred ejectors which are positioned in the chambers opposite a corresponding orifice. Each ejector may be in the form of an electrical resistor operating as a heating element under control of processor (although piezoelectric elements may be used instead). Each orifice with its associated ejector and portion of the chamber, defines a corresponding pulse jet with the orifice acting as a nozzle. In this manner, application of a single electric pulse to an ejector causes a droplet to be dispensed from a corresponding orifice. The foregoing head system 310 and other suitable dispensing head designs are described, e.g., in U.S. Patent Nos. 6,461,812; 6,323,043; and 6,599,693. However, other head system configurations may be used. The head system may include more than one head 310 retained by the same head retainer so that such retained heads move in unison together.

It should be understood though, that the present invention is not limited to pulse jet type deposition systems as part of the fabricator. In particular, any type of array fabricating apparatus may be used as the fabricator, including those such as described in U.S. Pat. No. 5,807,522, or an apparatus which may employ photolithographic techniques for forming arrays of moieties, or any other suitable apparatus which may be used for fabricating arrays of moieties. Other apparatuses for contacting array fabrication fluids may also be used.

Once one or more chemical arrays are disposed on flexible substrate 100, the flexible array may be employed in array assays as is. In certain embodiments, a flexible array substrate carrying one or more chemical arrays may be affixed to a foundation structure such as a pedestal/prong device for use in an array assay. A flexible array substrate having chemical arrays disposed thereon may be cut into individual pieces of flexible array substrate, in a manner described in, e.g., co-owned US Patent Application Serial No. 10/258,756, the disclosure of which has been previously incorporated by reference. Co-owned US Patent Application Serial No. 10.258,756, also describes various uses to which the flexible substrates may be applied such as array devices having multiple individual pieces of flexible array substrate (multi-array devices) including a foundation structure having a plurality of array sites and a plurality of individual pieces of flexible array substrate attached to the foundation structure, with an individual piece of flexible array occupying each array site (e.g., pedestal/ prong devices, pedestal/tab devices, microfluidic array devices, and the like).

For example, as noted above, at some time prior to use of the flexible substrate in an array assay, in certain embodiments a flexible substrate may be affixed to a foundation such as to top surfaces of prongs of a device that includes a pedestal supporting a plurality of prongs. In certain embodiments, a single sheet of flexible array substrate (before or after chemical arrays have been fabricated thereon) may be affixed to a foundation structure. A die having cutting edges corresponding to the positions of the prongs may be pressed against the single sheet of flexible array substrate on the foundation to form the multiple individual pieces of array substrate affixed to the foundation. The die and the 'punched-out' remainder of the sheet of flexible array substrate are removed. Arrays may be disposed on the flexible substrate before or after the cutting.

In a finished embodiment, an array of an addressable collection of probes may be present on each individual piece of flexible array substrate. As described above, probes may be fabricated on the individual pieces of flexible array substrate before the individual pieces of flexible array substrate are affixed to a foundation structure such as a pedestal/prong device or other foundation such as a foundation structures that include an elongated strip forming a pedestal which includes prongs in the form of tabs extending from the elongate strip, as described in the above-noted, co-owned US Patent Application Serial No. 10/258,756. The probes may be fabricated on the individual pieces of flexible array substrate after the individual pieces of flexible array substrate are affixed to the foundation structure. Yet another alternative includes fabricating multiple addressable collections of probes on a single flexible array substrate (e.g., a sheet or web) prior to separation of the single flexible array substrate into multiple individual pieces of flexible array substrate. In certain embodiments, at least one addressable collection of probes is different from at least one other addressable collection of probes present on a different individual piece of flexible array substrate, such that different collections of probes may be present on the multi-array device and may be screened in parallel. Parallel in this context means that a plurality of assays may be conducted at essentially the same time, wherein the assays may potentially be done on sample solutions from different sources and/or may be potentially be done using different addressable collections of probes (depending on the design of the multi-array device).

Accordingly, in certain embodiments, once multiple addressable collections of probes are fabricated on a single flexible array substrate (e.g., a sheet or web), the single flexible array substrate may be separated into multiple individual pieces of flexible array substrate and the individual pieces may be affixed to a foundation structure such as to the top surfaces of prongs of a multi-prong pedestal/prong device or the like. In certain embodiments, at least one addressable collection of probes present on an individual piece of flexible array affixed to one of the prongs is different from at least one other addressable collection of probes present on a different individual piece of flexible array substrate affixed to a different prong.

As described above, in certain embodiments a single flexible array substrate (e.g., a sheet or web) is affixed to the top surfaces of prongs of a prong-pedestal device prior to fabrication of the chemical arrays. In this manner, the arrays may be fabricated directly onto the flexible substrates already affixed to prongs which may enable fabrication closer to the edge of the prongs thus enabling more features per prong surface. After array fabrication, a die having cutting edges corresponding to the positions of the prongs may be pressed against the single sheet of flexible array substrate to provide the multiple individual pieces of array substrate affixed to the prongs and the die and remainder of the sheet of flexible array substrate may be removed. If an optional plate 250 was used, such may be removed prior to or after separating the single sheet of flexible array substrate into multiple, individual substrates.

Fig. 13 shows a portion of an exemplary embodiment of multi-array device in the form of a pedestal supporting a plurality of prongs, and at least one prong having affixed thereto a flexible array substrate having at least one chemical array disposed thereon. Multi-array device 600 includes pedestal 102 supporting a plurality of prongs 104a, 104b, 104c..., each having a respective flexible substrate 100a, 100b 100c...carrying a respective array 112a, 112b, 112c..., on a top surface thereof. As noted above, arrays 112a, 112b, 112c... may all be the same or some or all may be different.

### Exemplary Chemical Arrays

The subject invention also includes chemical arrays fabricated according to the subject invention. Embodiments include chemical arrays fabricated on a surface of a flexible array substrate using a rigid carrier (i.e., the flexible array substrate is stably associated with a rigid carrier).

A chemical array includes any one, two or three-dimensional arrangement of addressable regions bearing a particular chemical moiety or moieties (for example, biopolymers such as polynucleotide sequences) associated with that region. For example, each region may extend into a third dimension in the case where the substrate is porous while not having any substantial third dimension measurement (thickness) in the case where the substrate is non-porous. An array is "addressable" in that it has multiple regions (sometimes referenced as "features" or "spots" of the array) of different moieties (for example, different polynucleotide sequences) such that a region at a particular predetermined location (an "address") on the array will detect a particular target or class of targets (although a feature may incidentally detect non-targets of that feature). An array feature is generally homogenous in composition and concentration and the features may be separated by intervening spaces (although arrays without such separation can be fabricated).

Chemical arrays include at least two distinct polymers that differ from each other in terms of molecular structure attached to different and known locations on a substrate surface. For example, where the chemical moieties are polymers, they differ by monomeric sequence. Each distinct polymeric sequence of a chemical array may be present as a composition of multiple copies of the polymer on a substrate surface, e.g., as a spot or feature on the surface of the substrate. The number of distinct polymeric sequences, and hence spots or similar structures, present on the array may vary, where a typical array may contain more than about ten, more than about one hundred, more than about one thousand, more than about ten thousand or even more than about one hundred thousand features in an area of less than about 20 cm² or even less than about 10 cm². For example, features may have widths (that is, diameter, for a round spot) in the range from about 10 µm to about 1.0 cm. In other embodiments, each feature may have a width in the range from about 1.0 µm to about 1.0 mm, usually from about 5.0 µm to about 500 µm and more usually from about 10 µm to about 200 µm. Non-round features may have area ranges equivalent to that of circular features with the foregoing width (diameter) ranges. At least some, or all, of the features are of different compositions (for example, when any repeats of each feature composition are excluded, the remaining features may account for at least about 5%, 10% or 20% of the total number of features). Interfeature areas will typically (but not essentially) be present which do not carry any polynucleotide (or other biopolymer or chemical moiety of a type of which the features are composed). Such interfeature areas may be present, for example, where the arrays are formed by processes involving drop deposition of reagents, but may not be present when, for example, photolithographic array fabrication process are used. It will be appreciated though, that the interfeature areas, when present, could be of various sizes and configurations. The spots or features of distinct polymers present on the substrate surface are generally present as a pattern, where the pattern may be in the form of organized rows and columns of spots, e.g. a grid of spots, across the substrate surface, a series of curvilinear rows across the substrate surface, e.g. a series of concentric circles or semi-circles of spots, and the like.

In the broadest sense, the chemical arrays are arrays of polymeric or biopolymeric ligands or molecules, i.e., binding agents, where the polymeric binding agents may be any of: peptides, proteins, nucleic acids, polysaccharides, synthetic mimetics of such biopolymeric binding agents, etc. In many embodiments of interest, the arrays are arrays of nucleic acids, including oligonucleotides, polynucleotides, cDNAs, mRNAs, synthetic mimetics thereof, and the like.

The arrays may be fabricated using any convenient protocol, a noted above, where various methods for forming arrays from pre-formed probes, or methods for generating the array using synthesis techniques to produce the probes *in situ,* are generally known in the art. For example, *in situ* fabrication methods are described in US 5,449,754 for synthesizing peptide arrays, and in US 6,180,351 and WO 98/41531 and the references cited therein for synthesizing polynucleotide arrays. Further details of fabricating biopolymer arrays are described, e.g., in US 6,242,266, US 6,232,072 and US 6,171,797. Other techniques for fabricating biopolymer arrays include known light directed synthesis techniques. Arrays may be fabricated using drop deposition from pulse jets of either polynucleotide precursor units (such as monomers) in the case of *in situ* fabrication, or the previously obtained polynucleotide (see for example U.S. Patent Nos: 6,242,266, 6,232,072, 6,180,351, 6,171,797, and 6,323,043; and U.S. Patent Application Serial No. 09/302,898 filed April 30, 1999 by Caren et al., and the references cited therein, the disclosures of which are herein incorporated by reference). Other drop deposition methods may be used for fabrication. Also, instead of drop deposition methods, photolithographic array fabrication methods may be used such as described in, for example, U.S. Patent Nos. 5,599,695, 5,753,788, and 6,329,143. Interfeature areas need not be present, particularly when the arrays are made by photolithographic methods as described in those patents.

Embodiments include chemical arrays fabricated on a surface of a flexible substrate, as described above.

### Utility

The chemical arrays of the subject invention find use in a variety of different applications, where such applications are generally analyte detection applications in which the presence of a particular analyte (i.e., target) in a given sample is detected at least qualitatively, if not quantitatively. Protocols for carrying out such assays are well known to those of skill in the art and need not be described in great detail here. Generally, the sample suspected of containing the analyte of interest is contacted with an array generated on a surface of a prong under conditions sufficient for the analyte to bind to its respective binding pair member (i.e., probe) that is present on the array. Thus, if the analyte of interest is present in the sample, it binds to the array at the site of its complementary binding member and a complex is formed on the array surface. The presence of this binding complex on the array surface is then detected, e.g. through use of a signal production system, e.g. an isotopic or fluorescent label present on the analyte, etc. The presence of the analyte in the sample is then deduced from the detection of binding complexes on the substrate surface. Specific analyte detection applications of interest include, but are not limited to, hybridization assays in which nucleic acid arrays are employed.

Array assays, e.g., hybridization assays, may be performed using the subject rigid carriers in a manner analogous to that described above for fabricating the chemical arrays. Accordingly, aspects of the subject methods include conducting a chemical array assay such as a hybridization assay or the like, with at least one chemical array on a flexible chemical array substrate, where the chemical array may or may not be one manufactured according to the subject invention. Embodiments of such methods may include coupling a rigid carrier to a chuck, positioning an array assembly that includes a flexible chemical array substrate carrying at least one chemical array (with may be attached to a pedestal supporting a plurality of prongs) on a surface of the rigid carrier either before, during or after the coupling. The array assembly may then be stably associated to the rigid carrier and an array assay may be conducted with the stably associated array assembly, where the array assembly may be stably associated with the same or different rigid carrier for some or all of the array assay.

In these assays, a sample to be contacted with an array may first be prepared, where preparation may include labeling of the targets with a detectable label, e.g. a member of signal producing system. Generally, such detectable labels include, but are not limited to, radioactive isotopes, fluorescers, chemiluminescers, enzymes, enzyme substrates, enzyme cofactors, enzyme inhibitors, dyes, metal ions, metal sols, ligands (e.g., biotin or haptens) and the like. Thus, at some time prior to the detection step, described below, any target analyte present in the initial sample contacted with the array may be labeled with a detectable label. Labeling can occur either prior to or following contact with the array. In other words, the analyte, e.g., nucleic acids, present in the fluid sample contacted with the array may be labeled prior to or after contact, e.g., hybridization, with the array. In some embodiments of the subject methods, the sample analytes e.g., nucleic acids, are directly labeled with a detectable label, wherein the label may be covalently or non-covalently attached to the nucleic acids of the sample. For example, in the case of nucleic acids, the nucleic acids, including the target nucleotide sequence, may be labeled with biotin, exposed to hybridization conditions, wherein the labeled target nucleotide sequence binds to an avidin-label or an avidin-generating species. In an alternative embodiment, the target analyte such as the target nucleotide sequence is indirectly labeled with a detectable label, wherein the label may be covalently or non-covalently attached to the target nucleotide sequence. For example, the label may be non-covalently attached to a linker group, which in turn is (i) covalently attached to the target nucleotide sequence, or (ii) comprises a sequence which is complementary to the target nucleotide sequence. In another example, the probes may be extended, after hybridization, using chain-extension technology or sandwich-assay technology to generate a detectable signal (see, e.g., U.S. Patent No. 5,200,314).

In certain embodiments, the label is a fluorescent compound, i.e., capable of emitting radiation (visible or invisible) upon stimulation by radiation of a wavelength different from that of the emitted radiation, or through other manners of excitation, e.g. chemical or non-radiative energy transfer. The label may be a fluorescent dye. Usually, a target with a fluorescent label includes a fluorescent group covalently attached to a nucleic acid molecule capable of binding specifically to the complementary probe nucleotide sequence.

Following sample preparation (labeling, pre-amplification, etc.), the sample may be introduced to the array using any convenient protocol, e.g., sample may be introduced using a pipette, syringe or any other suitable introduction protocol. The sample is contacted with the array under appropriate conditions to form binding complexes on the surface of the substrate by the interaction of the surface-bound probe molecule and the complementary target molecule in the sample. The presence of target/probe complexes, e.g., hybridized complexes, may then be detected. In those array assembly embodiments having at least one array on more than one prong, sample may be introduced to each array and maintained under suitable conditions for an array assay. In those embodiments having at least one array generated on two or more prongs, cross-contamination between sample contacted to the different arrays of different prongs is prevented due to the configuration of the prongs of the array assembly.

In the case of hybridization assays, the sample is typically contacted with an array under stringent hybridization conditions, whereby complexes are formed between target nucleic acids that agent are complementary to probe sequences attached to the array surface, i.e., duplex nucleic acids are formed on the surface of the substrate by the interaction of the probe nucleic acid and its complement target nucleic acid present in the sample. A "stringent hybridization" and "stringent hybridization wash conditions" in the context of nucleic acid hybridization (e.g., as in array, Southern or Northern hybridizations) are sequence dependent, and are different under different experimental parameters. Stringent hybridization conditions that can be used to identify nucleic acids within the scope of the invention can include, e.g., hybridization in a buffer comprising 50% formamide, 5×SSC, and 1% SDS at 42°C, or hybridization in a buffer comprising 5×SSC and 1% SDS at 65°C, both with a wash of 0.2×SSC and 0.1% SDS at 65°C. Exemplary stringent hybridization conditions can also include a hybridization in a buffer of 40% formamide, 1 M NaCl, and 1% SDS at 37°C, and a wash in 1×SSC at 45°C. Alternatively, hybridization to filter-bound DNA in 0.5 M NaHPO4, 7% sodium dodecyl sulfate (SDS), 1 mM EDTA at 65°C, and washing in 0.1×SSC/0.1% SDS at 68°C can be employed. Yet additional stringent hybridization conditions include hybridization at 60°C or higher and 3 × SSC (450 mM sodium chloride/45 mM sodium citrate) or incubation at 42°C in a solution containing 30% formamide, 1M NaCl, 0.5% sodium sarcosine, 50 mM MES, pH 6.5. Those of ordinary skill will readily recognize that alternative but comparable hybridization and wash conditions can be utilized to provide conditions of similar stringency.

In certain embodiments, the stringency of the wash conditions that set forth the conditions which determine whether a nucleic acid is specifically hybridized to a surface bound nucleic acid. Wash conditions used to identify nucleic acids may include, e.g.: a salt concentration of about 0.02 molar at pH 7 and a temperature of at least about 50°C or about 55°C to about 60°C; or, a salt concentration of about 0.15 M NaCl at 72°C for about 15 minutes; or, a salt concentration of about 0.2×SSC at a temperature of at least about 50°C or about 55°C to about 60°C for about 15 to about 20 minutes; or, the hybridization complex is washed twice with a solution with a salt concentration of about 2×SSC containing 0.1% SDS at room temperature for 15 minutes and then washed twice by 0.1×SSC containing 0.1% SDS at 68°C for 15 minutes; or, equivalent conditions. Stringent conditions for washing can also be, e.g., 0.2xSSC/0.1% SDS at 42°C.

A specific example of stringent assay conditions is rotating hybridization at 65°C in a salt based hybridization buffer with a total monovalent cation concentration of 1.5 M (e.g., as described in U.S. Patent Application No. 09/655,482 filed on September 5, 2000, the disclosure of which is herein incorporated by reference) followed by washes of 0.5X SSC and 0.1X SSC at room temperature.

Stringent assay conditions are hybridization conditions that are at least as stringent as the above representative conditions, where a given set of conditions are considered to be at least as stringent if substantially no additional binding complexes that lack sufficient complementarity to provide for the desired specificity are produced in the given set of conditions as compared to the above specific conditions, where by "substantially no more" is meant less than about 5-fold more, typically less than about 3-fold more. Other stringent hybridization conditions are known in the art and may also be employed, as appropriate.

The array is incubated with the sample under appropriate array assay conditions, e.g., hybridization conditions, as mentioned above, where conditions may vary depending on the particular biopolymeric array and binding pair.

Once the incubation step is complete, the array is typically washed at least one time to remove any unbound and non-specifically bound sample from the substrate, generally at least two wash cycles are used. Washing agents used in array assays are known in the art and, of course, may vary depending on the particular binding pair used in the particular assay. For example, in those embodiments employing nucleic acid hybridization, washing agents of interest include, but are not limited to, salt solutions such as sodium, sodium phosphate (SSP) and sodium, sodium chloride (SSC) and the like as is known in the art, at different concentrations and which may include some surfactant as well. In certain embodiments the wash conditions described above may be employed.

Following the washing procedure, the array may then be interrogated or read to detect any resultant surface bound binding pair or target/probe complexes, e.g., duplex nucleic acids, to obtain signal data related to the presence of the surface bound binding complexes, i.e., the label is detected using colorimetric, fluorimetric, chemiluminescent, bioluminescent means or other appropriate means. The obtained signal data from the reading may be in any convenient form, i.e., may be in raw form or may be in a processed form. Accordingly, if arrays are present on each prong, each array may be interrogated or read to detect any resultant surface bound binding pair or target/probe complexes, e.g., duplex nucleic acids, to obtain signal data related to the presence of the surface bound binding complexes.

As such, one or more arrays will typically be exposed to a sample (for example, a fluorescently labeled analyte, e.g., protein containing sample) and the one or more arrays then read. Reading of the array(s) to obtain signal data may be accomplished by illuminating the array(s) and reading the location and intensity of resulting fluorescence (if such methodology was employed) at each feature of the array(s) to obtain a result. For example, an array scanner may be used for this purpose that is similar to the Agilent MICROARRAY SCANNER available from Agilent Technologies, Palo Alto, CA. Other suitable apparatus and methods for reading an array to obtain signal data are described in U.S. Patent Application Serial No: 09/846125 "Reading Multi-Featured Arrays" by Dorsel et al.; and Serial No. 09/430214 "Interrogating Multi-Featured Arrays" by Dorsel et al., the disclosures of which are herein incorporated by reference. However, arrays may be read by any other method or apparatus than the foregoing, with other reading methods including other optical techniques (for example, detecting chemiluminescent or electroluminescent labels) or electrical techniques (where each feature is provided with an electrode to detect hybridization at that feature in a manner disclosed in US Patent No. 6,221,583, the disclosure of which is herein incorporated by reference, and elsewhere).

In certain embodiments the results of the array reading (processed or not) may be forwarded (such as by communication) to a remote location if desired, and received there for further use (such as further processing). The data may be transmitted to the remote location for further evaluation and/or use. Any convenient telecommunications means may be employed for transmitting the data, e.g., facsimile, modem, Internet, etc.

As noted above, the arrays produced according to the subject method may be employed in a variety of array assays including hybridization assays. Specific hybridization assays of interest which may be practiced using the subject arrays include: gene discovery assays, differential gene expression analysis assays; nucleic acid sequencing assays, and the like. Patents describing methods of using arrays in various applications include: 5,143,854; 5,288,644; 5,324,633; 5,432,049; 5,470,710; 5,492,806; 5,503,980; 5,510,270; 5,525,464; 5,547,839; 5,580,732; 5,661,028; and 5,800,992.

Other array assays of interest include those where the arrays are arrays of polypeptide binding agents, e.g., protein arrays, where specific applications of interest include analyte detection/proteomics applications, including those described in U.S. Patent Nos.: 4,591,570; 5,171,695; 5,436,170; 5,486,452; 5,532,128; and 6,197,599; as well as published PCT application Nos. WO 99/39210; WO 00/04832; WO 00/04389; WO 00/04390; WO 00/54046; WO 00/63701; WO 01/14425 ; and WO 01/40803.

### Kits

Finally, kits are also provided. The subject kits may include a flexible array substrate having one or more chemical arrays disposed on a surface thereof fabricated according to the subject invention. In certain embodiments, a flexible array substrate may be affixed to a foundation structure such as a device including a pedestal supporting a plurality of prongs and may be a multi-array device. Accordingly, array assemblies that include flexible array substrates (e.g., individual flexible substrates) having one or more chemical arrays present, attached to on one or more prongs of a device that includes a pedestal supporting a plurality of prongs may be included.

The kits may further include one or more additional components necessary for carrying out an analyte detection assay, such as sample preparation reagents, buffers, labels, and the like. As such, the kits may include one or more containers such as vials or bottles, with each container containing a separate component for the assay, and reagents for carrying out an array assay such as a nucleic acid hybridization assay or the like. The kits may also include a denaturation reagent for denaturing the analyte, buffers such as hybridization buffers, wash mediums, enzyme substrates, reagents for generating a labeled target sample such as a labeled target nucleic acid sample, negative and positive controls.

The subject kits may also include written instructions for using the array assemblies in an array assay such as a hybridization assay, protein binding assay, or the like. Instructions of a kit may be printed on a substrate, such as paper or plastic, etc. As such, the instructions may be present in the kits as a package insert, in the labeling of the container of the kit or components thereof (i.e., associated with the packaging or sub-packaging) etc. In other embodiments, the instructions are present as an electronic storage data file present on a suitable computer readable storage medium, e.g., CD-ROM, diskette, etc. In yet other embodiments, the actual instructions are not present in the kit, but means for obtaining the instructions from a remote source, e.g. via the Internet, are provided. An example of this embodiment is a kit that includes a web address where the instructions can be viewed and/or from which the instructions can be downloaded. As with the instructions, this means for obtaining the instructions is recorded on a suitable substrate.

In many embodiments of the subject kits, the components of the kit are packaged in a kit containment element to make a single, easily handled unit, where the kit containment element, e.g., box or analogous structure, may or may not be an airtight container, e.g., to further preserve the one or more chemical arrays and reagents, if present, until use.

While the present invention has been described with reference to the specific embodiments thereof, it should be understood by those skilled in the art that various changes may be made and equivalents may be substituted without departing from the true scope of the invention. In addition, many modifications may be made to adapt a particular situation, material, composition of matter, process, process step or steps, to the objective and scope of the present invention. All such modifications are intended to be within the scope of the claims appended hereto.

## Claims

1. A rigid carrier (1) for stably associating a flexible chemical array substrate during array manufacturing comprising a first surface (3) for receiving a flexible chemical array substrate and a second surface (4) comprising a chuck-coupling region (18) for coupling said rigid carrier to a chuck.

2. The rigid carrier of Claim 1, wherein said rigid carrier is a vacuum carrier configured to apply a vacuum to a flexible chemical array substrate when said flexible chemical array substrate is positioned on said first surface.

3. The rigid carrier of Claim 1, wherein said rigid carrier is an electrostatic carrier configured to apply an electrical field between said flexible array substrate and said first surface of said rigid carrier when said flexible array substrate is positioned on said first surface.

4. The rigid carrier of Claim 1, wherein said rigid carrier is an electrostatic/vacuum hybrid carrier.

5. A structure comprising:
(a) a rigid carrier as claimed in any preceding claim; and
(b) a flexible chemical array substrate stably associated to said first surface of the rigid carrier.

6. A method of processing at least one chemical array on a flexible chemical array substrate, said method comprising:
(a) coupling a rigid carrier (1) to a chuck (300),
(b) positioning a flexible chemical array substrate (100) on a surface (3) of said rigid carrier either before, during or after said coupling;
(c) stably associating said flexible chemical array substrate to said rigid carrier surface; and
(d) performing at least one chemical array process on said stably associated flexible chemical array substrate.

7. The method of Claim 6, wherein said process is a chemical array fabrication process or a chemical array assay process.

8. The method of Claim 6 or 7, wherein said chuck is in electrical communication with a voltage source.

9. The method of Claim 6 or 7, wherein said chuck is in fluid communication with a vacuum source.

10. The method of any of Claims 6-9, wherein said method comprises transporting said rigid carrier between at least two different processing stations and said method comprises performing steps (a)-(d) at a first station having a first chuck and performing said at least one chemical array process on said stably associated flexible chemical array substrate at said first station, decoupling said rigid carrier from said first chuck and moving said rigid carrier/flexible chemical array substrate structure to a second chuck at a second station, coupling said rigid carrier to said second chuck and performing steps (c)-(d) at said second station, and performing said at least one chemical array process on said stably associated flexible chemical array substrate at said second station.

11. The method of any of Claims 6-9, wherein said method further comprises releasing said flexible chemical substrate from said stable association with said rigid carrier after at least one chemical array has been processed on said flexible chemical array substrate, removing said flexible chemical array substrate carrying said at least one chemical array from said rigid carrier and placing said flexible chemical array substrate carrying said at least one chemical array on a support.

12. The method of Claim 11, wherein said support comprises a pedestal supporting a plurality of prongs, and said flexible chemical array substrate carrying said at least one chemical array is placed on a surface of a prong.
